# EUROPEAN PATENT APPLICATION

(11) **EP 4 764 597 A1**
(43) Date of publication of application: **24.06.2026**
(21) Application number: 25218668.9
(22) Date of filing: 26.11.2025
(51) Int. Cl.: G01S 7/40, G01S 7/41, G01S 13/931, G01S 13/86, G01S 7/00

(54) **METHODS AND SYSTEMS FOR ESTIMATING THE SENSITIVITY OF VEHICLE SENSORS**

(30) Priority: 18.12.2024 US 202418986221
(71) Applicant: WAYMO LLC, Mountain View, CA 94043 (US)
(72) Inventor: FINA, Michael Dane, Mountain View, 94043 (US); HO, Kenneth T., Mountain View, 94043 (US)
(74) Representative: Anderson, Oliver Ben

(57) **Abstract**

Examples relate to methods and systems for estimating radar sensitivity. A computing system uses radar data to detect objects located in a vehicle's environment. The system may then filter the radar data corresponding to the objects based on a set of predetermined criteria to identify a particular object that corresponds to a first type of object. The system may perform a comparison between a radar parameter determined based on radar data corresponding to the particular object and an expected radar parameter represented by a data model. The data model is generated based on radar data aggregated for a plurality of objects that match the first type of object. The system may then estimate radar sensitivity loss for the radar based on the comparison and adjust operation of the radar or the vehicle's control strategy when the estimated sensitivity loss exceeds a threshold loss.

## Description

### BACKGROUND

Advancements in computing, sensors, and other technologies have enabled some vehicles to navigate safely between locations autonomously, i.e., without requiring input from a human driver. By processing sensor measurements of the surrounding environment in real-time, a semi-autonomous or autonomous vehicle can transport passengers or objects (e.g., cargo) between locations while avoiding obstacles, obeying traffic requirements, anticipating movements of nearby agents (e.g., other vehicles), and performing other actions that are typically conducted by a driver. Shifting both decision-making and control of the vehicle over to vehicle systems can allow the vehicle's passengers to devote their attention to tasks other than driving.

Automotive radar is one type of sensor technology used for the detection and monitoring of the surrounding environment by advanced driver-assistance systems (ADAS) and autonomous driving systems. In some cases, radar is used to detect and identify other vehicles, pedestrians, and various obstacles, as well as ascertain their distance, velocity, and trajectory.

A radar typically comprises a radiating element equipped with an antenna that transmits radio waves. These waves reflect off objects within the environment and are subsequently captured by the antenna. The returned signals are then processed to evaluate the attributes of the reflecting objects, including Radar Cross Section (RCS) measurements that indicate how detectable each object is by radar. A larger RCS indicates that an object is more easily detected, while a smaller RCS suggests that the object is more difficult to detect. The RCS for an object depends on multiple factors, including the size, shape, material, and surface characteristics of the object, as well as the frequency and polarization of the radar signal. Different types of objects, such as cars, motorcycles, pedestrians, and others, typically have diverse RCS values, which can be used to help identify the types of objects in radar data.

### SUMMARY

Example embodiments relate to methods and systems for estimating the sensitivity of radar and other types of vehicle sensors. Disclosed solutions involve estimating radar sensitivity loss in vehicle radars by comparing filtered radar data to a data model of expected signal-to-noise ratio (SNR) and/or radar cross-section (RCS) values for similar objects. The radar data may be filtered based on criteria such as range, degree of line of sight, object visibility relative to radars (e.g., unoccluded visibility), and weather conditions. A computing system compares this filtered data to the data model to estimate sensitivity loss, which serves as a real-time indicator of radar degradation. Vehicle systems can use this information to identify potential hardware faults, adjust operations, and/or trigger maintenance when the loss exceeds certain thresholds. This approach enables continuous monitoring and optimization of radar performance, enhancing overall vehicle safety and reliability.

In one aspect, an example method is described. The method involves receiving, at a computing system, radar data representing an environment of a vehicle from a radar coupled to the vehicle and detecting, based on the radar data, one or more objects located in the environment. The method further involves filtering, based on a set of predetermined criteria, the radar data corresponding to the one or more objects to identify a particular object that corresponds to a first type of object and performing a comparison between a radar parameter determined based on radar data corresponding to the particular object and an expected radar parameter represented by a data model. The data model is generated based on radar data aggregated for a plurality of objects that match the first type of object. The method also involves estimating radar sensitivity loss for the radar based on the comparison.

In another aspect, an example system is described. The system includes a vehicle having a radar and a computing device. The computing device is configured to receive radar data representing an environment of the vehicle from the radar coupled to the vehicle and detect, based on the radar data, one or more objects located in the environment that correspond to a first type of object. The computing device is also configured to filter, based on a set of predetermined criteria, the radar data corresponding to the one or more objects to identify a particular object that corresponds to a first type of object and perform a comparison between a radar parameter determined based on radar data corresponding to the particular object and an expected radar parameter represented by a data model. The data model is generated based on radar data aggregated for a plurality of objects that match the first type of object. The computing device is also configured to estimate radar sensitivity loss for the radar based on the comparison.

In yet another aspect, a non-transitory computer-readable medium is described. The non-transitory computer-readable medium is configured to store instructions, that when executed by a computing system comprising one or more processors, causes the computing system to perform operations. The operations involve receiving radar data representing an environment of a vehicle from a radar coupled to the vehicle and detecting, based on the radar data, one or more objects located in the environment. The operations also involve filtering, based on a set of predetermined criteria, the radar data corresponding to the one or more objects to identify a particular object that corresponds to a first type of object and performing a comparison between a radar parameter determined based on radar data corresponding to the particular object and an expected radar parameter represented by a data model. The data model is generated based on radar data aggregated for a plurality of objects that match the first type of object. The operations also involve estimating radar sensitivity loss for the radar based on the comparison.

These as well as other aspects, advantages, and alternatives will become apparent to those of ordinary skill in the art by reading the following detailed description, with reference, where appropriate, to the accompanying drawings.

### BRIEF DESCRIPTION OF THE DRAWINGS

Figure 1 is a functional block diagram illustrating a vehicle, according to example embodiments.
Figure 2A is an illustration of a physical configuration of a vehicle, according to example embodiments.
Figure 2B is an illustration of a physical configuration of a vehicle, according to example embodiments.
Figure 2C is an illustration of a physical configuration of a vehicle, according to example embodiments.
Figure 2D is an illustration of a physical configuration of a vehicle, according to example embodiments.
Figure 2E is an illustration of a physical configuration of a vehicle, according to example embodiments.
Figure 2F is an illustration of a physical configuration of a vehicle, according to example embodiments.
Figure 2G is an illustration of a physical configuration of a vehicle, according to example embodiments.
Figure 2H is an illustration of a physical configuration of a vehicle, according to example embodiments.
Figure 2I is an illustration of a physical configuration of a vehicle, according to example embodiments.
Figure 2J is an illustration of a field of view for various sensors, according to example embodiments.
Figure 2K is an illustration of beam steering for a sensor, according to example embodiments.
Figure 3 is a conceptual illustration of wireless communication between various computing systems related to an autonomous or semi-autonomous vehicle, according to example embodiments.
Figure 4 is a block diagram of a system including a radar system, according to example embodiments.
Figure 5 is a conceptual illustration of a system for estimating and evaluating the sensitivity and performance of vehicle radar and other types of vehicle sensors, according to example embodiments.
Figure 6 is a flowchart of a method for estimating and evaluating the sensitivity of vehicle radar, according to example embodiments.

### DETAILED DESCRIPTION

Example methods and systems are contemplated herein. Any example embodiment or feature described herein is not necessarily to be construed as preferred or advantageous over other embodiments or features. Further, the example embodiments described herein are not meant to be limiting. It will be readily understood that certain aspects of the disclosed systems and methods can be arranged and combined in a wide variety of different configurations, all of which are contemplated herein. In addition, the particular arrangements shown in the figures should not be viewed as limiting. It should be understood that other embodiments might include more or less of each element shown in a given figure. Additionally, some of the illustrated elements may be combined or omitted. Yet further, an example embodiment may include elements that are not illustrated in the figures.

This disclosure presents methods and systems for estimating the sensitivity and performance of automotive radars and other vehicle sensors. The approach leverages radar-perception-associated objects, filtered based on specific criteria, to establish a common set of objects with similar signal-to-noise ratio (SNR) or radar cross-section (RCS). By comparing the SNR and/or RCS data from these filtered objects against a data model of similarly filtered objects, a computing system can estimate radar sensitivity loss. Vehicle systems can then use this estimated loss to trigger cleaning processes, adjust sensor operations, request maintenance, modify sensor processing thresholds, or perform other optimizations to enhance sensor and vehicle performance.

For example, a vehicle computing system may compare SNR and/or RCS data from radar returns reflected off passenger vehicles to a data model generated for this purpose. This model represents expected radar measurement values (such as SNR and RCS ranges) for radar returns from passenger vehicles, gathered by calibrated radars with clean radomes under optimal operating conditions. The model may be based on aggregated measurements from numerous vehicle radar systems in various environments, providing a robust set of expected values. While this example uses passenger vehicles, the technique can be applied to various objects commonly encountered during navigation, such as traffic signs, buildings, trucks, or bridges.

These techniques enable vehicle systems to identify rapid degradation in radar sensitivity in real-time, creating a loss estimator that allows immediate adjustments to vehicle operations and sensor parameters when necessary. They also serve as a sensitivity monitor to identify radars with potential hardware faults, detect performance impacts from debris, or determine when weather conditions are negatively affecting radar performance. By implementing these techniques, vehicle systems can optimize radar performance, such as by adjusting operations when signal loss for a radar exceeds a threshold value. This approach enhances the overall reliability and effectiveness of vehicle sensor systems, contributing to improved safety and performance in various driving conditions.

The data model used to evaluate sensor performance is typically developed off-vehicle, incorporating various parameters such as radar mount position, waveform characteristics, range, and gain settings. This model serves as a reference for comparison with real-time detection data collected during vehicle navigation. For example, the model may be based on radar measurements of similarly sized vehicles at different ranges. Once developed, the model is distributed to vehicles for use during navigation. As a vehicle's radar system detects objects, the parameters (e.g., SNR and RCS profiles) of these detections are compared to the model, enabling vehicle systems to estimate performance loss in real-time and adjust operations when necessary.

In some instances, a vehicle may generate its own data model or refine a model received from a remote computing system. The vehicle might use radar measurements taken under ideal conditions to establish baselines for SNR, RCS, and other radar parameters. These baselines then serve as a reference for evaluating radar sensitivity and performance during subsequent navigation.

The disclosed techniques also incorporate a weather-specific filtering process, recognizing that weather conditions can significantly impact radar sensitivity. This weather-specific filtering of perception objects allows for more accurate estimation of radar sensitivity loss under various environmental conditions. By addressing the challenges of monitoring radar performance in complex automotive environments, these techniques provide a comprehensive approach to radar sensitivity estimation, enabling quick relative estimates and validation. While primarily discussed in the context of radar, these techniques can be adapted for other types of vehicle sensors, offering a versatile solution for maintaining optimal sensor performance across various automotive applications.

During navigation, a computing system may receive radar data representing objects in a vehicle's environment, generated by one or more vehicle-mounted radar sensors. These objects may include other vehicles, pedestrians, animals, buildings, trees, or any other entities present in the environment. The computing system then filters this radar data based on predetermined criteria. These criteria may include object range relative to the radar and/or vehicle, weather conditions in the environment, and whether objects are within the radar's direct line of sight. For instance, the system may filter out objects beyond a certain range, those not within a specific degree of the radar's line of sight, or when weather conditions are unfavorable for radar detection (e.g., heavy rain or snow). The computing system may adjust these criteria based on the vehicle's environment and other relevant factors.

The computing system then compares the SNR and/or RCS data of the filtered objects against a data model. This model represents expected SNR and RCS data aggregated from measurements of similar object types in various conditions and scenarios. The comparison may involve calculating the difference between actual and expected SNR/RCS data, or using other suitable comparison methods. Based on this comparison, the computing system estimates the radar sensitivity loss, indicating the radar's degraded ability to detect objects in its environment. This estimate can be used in real-time to identify rapid sensitivity degradation or to monitor sensitivity over time, potentially identifying hardware faults leading to reduced sensitivity. When the estimated loss exceeds a certain threshold, vehicle systems may adjust radar operation or use. Additional actions may include triggering sensor cleaning operations, providing alerts to passengers and/or remote systems, and adjusting detection thresholds. This approach enables continuous monitoring and optimization of radar performance, enhancing overall vehicle safety and reliability.

In some examples, a system may perform disclosed techniques to monitor and identify sensitivity loss for individual radars on a vehicle. In particular, the technique can be performed separately for each radar on the vehicle. A computing system may receive radar data from multiple radar sensors, each mounted at different positions on the vehicle. For each radar sensor, the computing system may filter the radar data based on the predetermined criteria, including range, weather conditions, and direct line of sight specific to that radar's position and field of view. The system may then perform a comparison between measured radar parameters (e.g., the SNR data and/or RCS data) from the filtered objects detected by that specific radar and a data model representing expected SNR or RCS data for similar objects. Based on the comparison, the computing system may estimate the radar sensitivity loss for that individual radar. By applying this process to each radar independently, the system may identify when a particular radar is suffering from sensitivity loss compared to the others.

In some cases, the data model used for comparison may be tailored to specific characteristics for each radar, such as its mount position, waveform parameters, range, and gain settings. This allows for more accurate sensitivity loss estimation that accounts for the unique properties and expected performance of each radar. In addition, the computing system may track the estimated sensitivity loss for each radar over time. This historical data may be used to identify trends or sudden changes in individual radar performance. For instance, if one radar consistently shows higher sensitivity loss compared to others in similar conditions, it may indicate a hardware issue specific to that radar or that radar may require cleaning.

In some aspects, the system may apply different thresholds for identifying significant sensitivity loss for different radars based on their importance for various vehicle functions. For example, a forward-facing radar may have a lower threshold for triggering alerts compared to a side-facing radar. As such, the real-time loss estimator may be applied individually to each radar, allowing the system to quickly identify cases where sensitivity has degraded rapidly for a specific radar. This can be particularly useful for detecting sudden issues like physical obstruction or damage to a single radar sensor.

In some cases, the system may compare the sensitivity loss estimates across different radars on the vehicle. Significant discrepancies between radars covering similar areas or operating under similar conditions may indicate that one of the radars is experiencing abnormal sensitivity loss. In addition, the sensitivity monitor functionality may be used to track long-term performance trends for each radar individually. This can help identify radars that may be gradually degrading over time due to hardware faults or environmental factors specific to their mounting location.

In some aspects, the system may adjust the frequency of sensitivity loss estimation for individual radars based on their performance history. Radars showing signs of degradation may be monitored more frequently to track their condition more closely. The system may generate separate alerts or notifications for each radar when sensitivity loss exceeds predetermined thresholds. This may allow for targeted maintenance or troubleshooting of specific radar units that are underperforming. In some cases, the vehicle's sensor fusion algorithms may be adjusted based on the individual radar sensitivity loss estimates. The system may reduce the weighting of data from radars showing significant sensitivity loss in the overall perception and decision-making processes. By applying disclosed techniques to each radar individually, the system can provide a comprehensive and granular assessment of the radar suite's performance, enabling timely identification and addressing of sensitivity issues in specific radar units on the vehicle.

In response to detecting sensitivity loss at a radar, vehicle systems may take several actions. The system may adjust sensor fusion algorithms to reduce reliance on data from the affected radar, giving more weight to other sensors or radars functioning normally. The frequency of sensitivity monitoring for the affected radar may be increased to track its performance more closely. The vehicle system may attempt to modify the radar's operating parameters, such as transmit power, gain settings, waveform characteristics, radar timeline, changing number of active transmit elements, and/or beam steering parameters, to compensate for the detected loss if possible.

In some cases, the system may fine-tune the radar's signal processing algorithms, adjusting detection thresholds, modifying tracking filters, or updating clutter rejection techniques based on observed performance metrics. The radar's operating frequency may be shifted to avoid interference or improve penetration in adverse weather conditions. In multi-sensor systems, fusion algorithms may be adjusted based on the evaluated radar performance. The system may generate alerts about reduced sensor capability and adjust vehicle control strategies, potentially reducing maximum allowed speed or increasing following distances. Self-diagnostic routines may be initiated, and if equipped, an automated cleaning system may be triggered.

The vehicle system may log detailed performance data for later analysis and potential over-the-air updates. The telematics system may be notified to schedule maintenance or inspection. In some cases, the system may dynamically reconfigure functional radars to compensate for lost coverage, activate backup sensors if available, or limit certain advanced driver assistance features that rely heavily on the affected radar. These actions aim to maintain overall sensing capability and ensure safe vehicle operation despite reduced radar performance.

The following description and accompanying drawings will elucidate features of various example embodiments. The embodiments provided are by way of example, and are not intended to be limiting. As such, the dimensions of the drawings are not necessarily to scale.

Example systems within the scope of the present disclosure will now be described in greater detail. An example system may be implemented in or may take the form of an automobile. Additionally, an example system may also be implemented in or take the form of various vehicles, such as cars, trucks (e.g., pickup trucks, vans, tractors, and tractor trailers), motorcycles, buses, airplanes, helicopters, drones, lawn mowers, earth movers, boats, submarines, all-terrain vehicles, snowmobiles, aircraft, recreational vehicles, amusement park vehicles, farm equipment or vehicles, construction equipment or vehicles, warehouse equipment or vehicles, factory equipment or vehicles, trams, golf carts, trains, trolleys, sidewalk delivery vehicles, and robot devices. Other vehicles are possible as well. Further, in some embodiments, example systems might not include a vehicle.

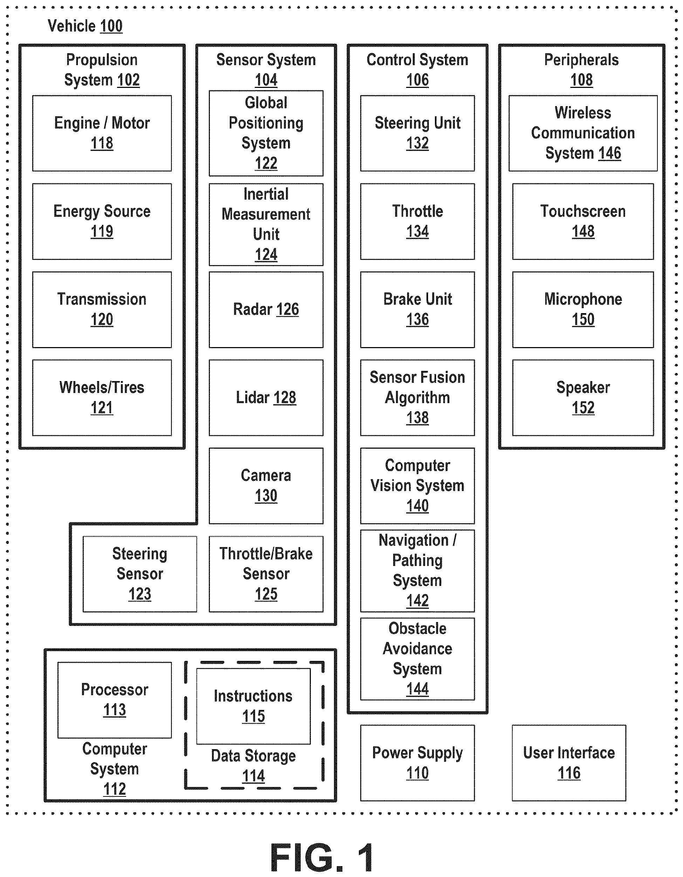

Referring now to the figures, Figure 1 is a functional block diagram illustrating example vehicle 100, which may be configured to operate fully or partially in an autonomous mode. More specifically, vehicle 100 may operate in an autonomous mode without human interaction through receiving control instructions from a computing system. As part of operating in the autonomous mode, vehicle 100 may use sensors to detect and possibly identify objects of the surrounding environment to enable safe navigation. Additionally, vehicle 100 may operate in a partially autonomous (i.e., semi-autonomous) mode in which some functions of the vehicle 100 are controlled by a human driver of the vehicle 100 and some functions of the vehicle 100 are controlled by the computing system. For example, vehicle 100 may also include subsystems that enable the driver to control operations of vehicle 100 such as steering, acceleration, and braking, while the computing system performs assistive functions such as lane-departure warnings / lane-keeping assist or adaptive cruise control based on other objects (e.g., vehicles) in the surrounding environment.

As described herein, in a partially autonomous driving mode, even though the vehicle assists with one or more driving operations (e.g., steering, braking and/or accelerating to perform lane centering, adaptive cruise control, advanced driver assistance systems (ADAS), and emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods are described below in conjunction with autonomous vehicles, these or similar systems and methods can be used in various driver assistance systems that do not rise to the level of fully autonomous driving systems (i.e. partially autonomous driving systems). In the United States, the Society of Automotive Engineers (SAE) have defined different levels of automated driving operations to indicate how much, or how little, a vehicle controls the driving, although different organizations, in the United States or in other countries, may categorize the levels differently. More specifically, the disclosed systems and methods can be used in SAE Level 2 driver assistance systems that implement steering, braking, acceleration, lane centering, adaptive cruise control, etc., as well as other driver support. The disclosed systems and methods can be used in SAE Level 3 driving assistance systems capable of autonomous driving under limited (e.g., highway) conditions. Likewise, the disclosed systems and methods can be used in vehicles that use SAE Level 4 self-driving systems that operate autonomously under most regular driving situations and require only occasional attention of the human operator. In all such systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

As shown in Figure 1, vehicle 100 may include various subsystems, such as propulsion system 102, sensor system 104, control system 106, one or more peripherals 108, power supply 110, computer system 112 (which could also be referred to as a computing system) with data storage 114, and user interface 116. In other examples, vehicle 100 may include more or fewer subsystems, which can each include multiple elements. The subsystems and components of vehicle 100 may be interconnected in various ways. In addition, functions of vehicle 100 described herein can be divided into additional functional or physical components, or combined into fewer functional or physical components within embodiments. For instance, the control system 106 and the computer system 112 may be combined into a single system that operates the vehicle 100 in accordance with various operations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some embodiments, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, other petroleum-based fuels, propane, other compressed gas-based fuels, ethanol, solar panels, batteries, and/or other sources of electrical power. In some embodiments, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example embodiments. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar 126, lidar 128, camera 130, steering sensor 123, and throttle/brake sensor 125, among other possible sensors. In some embodiments, sensor system 104 may also include sensors configured to monitor internal systems of the vehicle 100 (e.g., O₂ monitor, fuel gauge, engine oil temperature, and brake wear).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar 126 may represent one or more systems configured to use radio signals to sense objects, including the speed and heading of the objects, within the surrounding environment of vehicle 100. As such, radar 126 may include antennas configured to transmit and receive radio signals. In some embodiments, radar 126 may correspond to a mountable radar configured to obtain measurements of the surrounding environment of vehicle 100.

Lidar 128 may include one or more laser sources, a laser scanner, and one or more detectors, among other system components, and may operate in a coherent mode (e.g., using heterodyne detection) or in an incoherent detection mode (i.e., time-of-flight mode). In some embodiments, the one or more detectors of the lidar 128 may include one or more photodetectors, which may be especially sensitive detectors (e.g., avalanche photodiodes). In some examples, such photodetectors may be capable of detecting single photons (e.g., single-photon avalanche diodes (SPADs)). Further, such photodetectors can be arranged (e.g., through an electrical connection in series) into an array (e.g., as in a silicon photomultiplier (SiPM)). In some examples, the one or more photodetectors are Geiger-mode operated devices and the lidar includes subcomponents designed for such Geiger-mode operation.

Camera 130 may include one or more devices (e.g., still camera, video camera, a thermal imaging camera, a stereo camera, and a night vision camera) configured to capture images of the surrounding environment of vehicle 100.

Steering sensor 123 may sense a steering angle of vehicle 100, which may involve measuring an angle of the steering wheel or measuring an electrical signal representative of the angle of the steering wheel. In some embodiments, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve and a carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in the navigation of vehicle 100, such as steering unit 132, throttle 134, brake unit 136, sensor fusion algorithm 138, computer vision system 140, navigation/pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some embodiments, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some embodiments, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software (e.g., a general purpose processor such as a central processing unit (CPU), a specialized processor such as a graphical processing unit (GPU) or a tensor processing unit (TPU), an application-specific integrated circuit (ASIC), a field programmable gate array (FPGA), a volatile memory, a non-volatile memory, or one or more machine-learned models) operable to process and analyze images in an effort to determine objects that are in motion (e.g., other vehicles, pedestrians, bicyclists, or animals) and objects that are not in motion (e.g., traffic lights, roadway boundaries, speedbumps, or potholes). As such, computer vision system 140 may use object recognition, Structure From Motion (SFM), video tracking, and other algorithms used in computer vision, for instance, to recognize objects, map an environment, track objects, estimate the speed of objects, etc.

Navigation/pathing system 142 may determine a driving path for vehicle 100, which may involve dynamically adjusting navigation during operation. As such, navigation/pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, microphone 150 (e.g., one or more interior and/or exterior microphones), and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as code-division multiple access (CDMA), evolution-data optimized (EVDO), global system for mobile communications (GSM) / general packet radio service (GPRS), or cellular communication, such as 4G worldwide interoperability for microwave access (WiMAX) or long-term evolution (LTE), or 5G. Alternatively, wireless communication system 146 may communicate with a wireless local area network (WLAN) using WIFI^{®} or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some embodiments. For instance, power supply 110 may include one or more batteries configured to provide electrical power. Vehicle 100 may also use other types of power supplies. In an example embodiment, power supply 110 and energy source 119 may be integrated into a single energy source.

Vehicle 100 may also include computer system 112 to perform operations, such as operations described therein. As such, computer system 112 may include processor 113 (which could include at least one microprocessor) operable to execute instructions 115 stored in a non-transitory, computer-readable medium, such as data storage 114. As such, processor 113 can represent one or multiple processors. In some embodiments, computer system 112 may represent a plurality of computing devices that may serve to control individual components or subsystems of vehicle 100 in a distributed fashion.

In some embodiments, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, or control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of a surrounding environment of vehicle 100 operating in an autonomous or semi-autonomous mode. The state of the surrounding environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar 126 and/or lidar 128, and/or some other environmental mapping, ranging, and/or positioning sensor system may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100 (i.e., wireless communication system 146, computer system 112, data storage 114, and user interface 116) as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

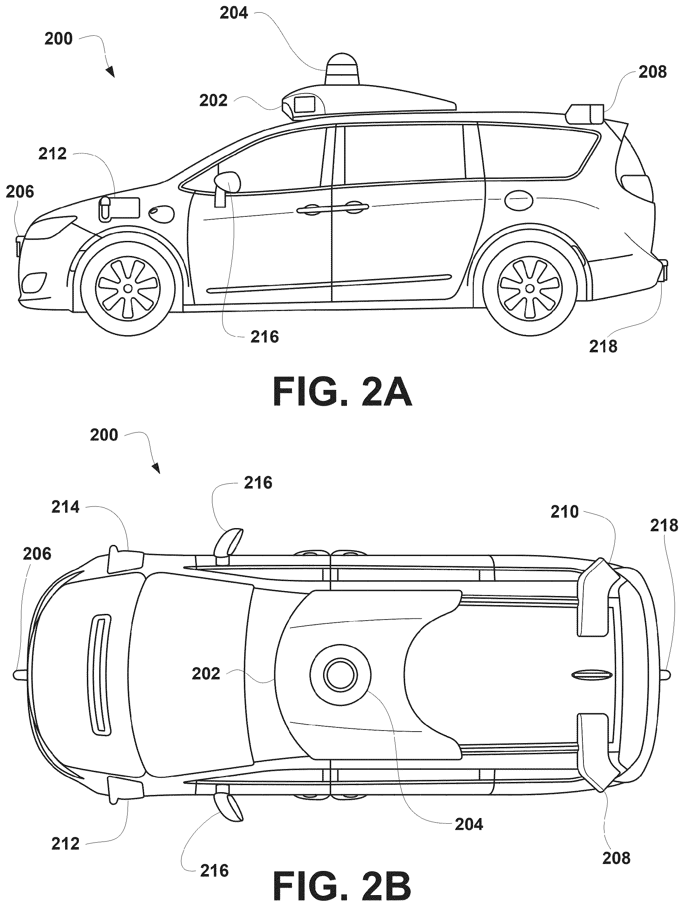

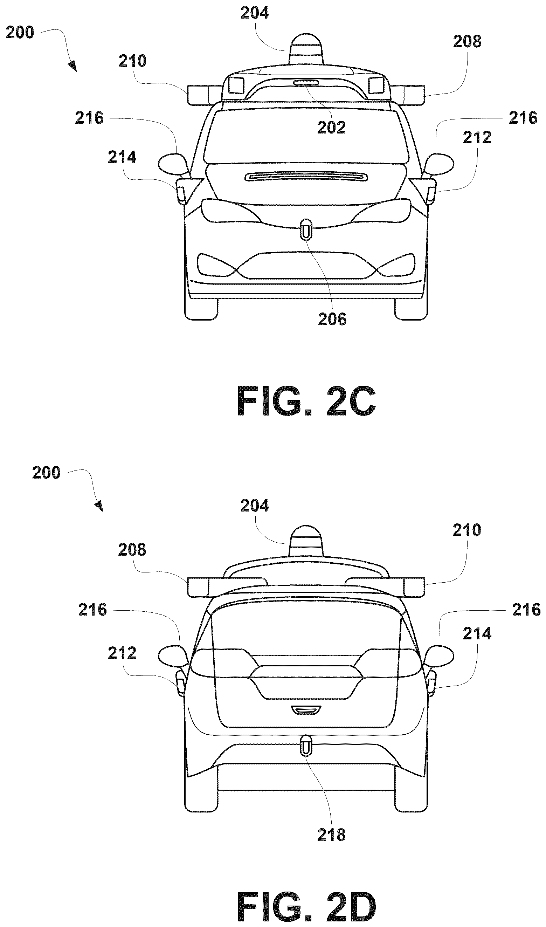

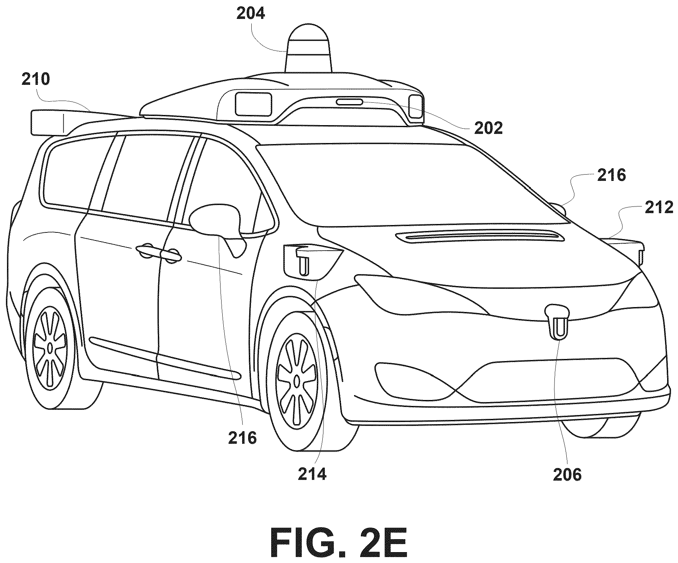

Figures 2A-2E show an example vehicle 200 (e.g., a fully autonomous vehicle or semi-autonomous vehicle) that can include some or all of the functions described in connection with vehicle 100 in reference to Figure 1. Although vehicle 200 is illustrated in Figures 2A-2E as a van with side view mirrors for illustrative purposes, the present disclosure is not so limited. For instance, vehicle 200 can represent a truck, a car, a semi-trailer truck, a motorcycle, a golf cart, an off-road vehicle, a farm vehicle, or any other vehicle that is described elsewhere herein (e.g., buses, boats, airplanes, helicopters, drones, lawn mowers, earth movers, submarines, all-terrain vehicles, snowmobiles, aircraft, recreational vehicles, amusement park vehicles, farm equipment, construction equipment or vehicles, warehouse equipment or vehicles, factory equipment or vehicles, trams, trains, trolleys, sidewalk delivery vehicles, and robot devices).

Vehicle 200 may include one or more sensor systems 202, 204, 206, 208, 210, 212, 214, and 218. In some embodiments, sensor systems 202, 204, 206, 208, 210, 212, 214, and/or 218 could represent one or more optical systems (e.g. cameras), one or more lidars, one or more radars, one or more inertial sensors, one or more humidity sensors, one or more acoustic sensors (e.g., microphones and sonar devices), or one or more other sensors configured to sense information about an environment that is surrounding vehicle 200. In other words, any sensor system now known or later created could be coupled to vehicle 200 and/or could be utilized in conjunction with various operations of vehicle 200. As an example, a lidar could be utilized in self-driving or other types of navigation, planning, perception, and/or mapping operations of vehicle 200. In addition, sensor systems 202, 204, 206, 208, 210, 212, 214, and/or 218 could represent a combination of sensors described herein (e.g., one or more lidars and radars; one or more lidars and cameras; one or more cameras and radars; or one or more lidars, cameras, and radars).

Note that the number, location, and type of sensor systems (e.g., 202 and 204) depicted in Figures 2A-E are intended as a non-limiting example of the location, number, and type of such sensor systems of an autonomous or semi-autonomous vehicle. Alternative numbers, locations, types, and configurations of such sensors are possible (e.g., to comport with vehicle size, shape, aerodynamics, fuel economy, aesthetics, or other conditions, to reduce cost, or to adapt to specialized environmental or application circumstances). For example, the sensor systems (e.g., 202 and 204) could be disposed of in various other locations on the vehicle and could have fields of view that correspond to internal and/or surrounding environments of vehicle 200.

The sensor system 202 may be mounted atop vehicle 200 and may include one or more sensors configured to detect information about an environment that is surrounding vehicle 200, and output indications of the information. For example, sensor system 202 can include any combination of cameras, radars, lidars, inertial sensors, humidity sensors, and acoustic sensors (e.g., microphones and sonar devices). The sensor system 202 can include one or more movable mounts that could be operable to adjust the orientation of one or more sensors in the sensor system 202. In one embodiment, the movable mount could include a rotating platform that could scan sensors so as to obtain information from each direction around vehicle 200. In another embodiment, the movable mount of the sensor system 202 could be movable in a scanning fashion within a particular range of angles and/or azimuths and/or elevations. The sensor system 202 could be mounted atop the roof of a car, although other mounting locations are possible.

Additionally, the sensors of sensor system 202 could be distributed in different locations and need not be collocated in a single location. Furthermore, each sensor of sensor system 202 can be configured to be moved or scanned independently of other sensors of sensor system 202. Additionally or alternatively, multiple sensors may be mounted at one or more of sensor systems 202, 204, 206, 208, 210, 212, 214, and/or 218. For example, there may be two lidar devices mounted at a sensor location and/or there may be one lidar device and one radar mounted at a sensor location.

The one or more sensor systems 202, 204, 206, 208, 210, 212, 214, and/or 218 could include one or more lidar devices. For example, the lidar devices could include a plurality of light-emitter devices arranged over a range of angles with respect to a given plane (e.g., the x-y plane). For example, one or more of sensor systems 202, 204, 206, 208, 210, 212, 214, and/or 218 may be configured to rotate or pivot about an axis (e.g., the z-axis) perpendicular to the given plane so as to illuminate an environment that is surrounding vehicle 200 with light pulses. Based on detecting various aspects of reflected light pulses (e.g., the elapsed time of flight, polarization, and intensity), information about the surrounding environment may be determined.

In an example embodiment, sensor systems 202, 204, 206, 208, 210, 212, 214, and/or 218 may be configured to provide respective point cloud information that may relate to physical objects within the surrounding environment of vehicle 200. While vehicle 200 and sensor systems 202, 204, 206, 208, 210, 212, 214, and 218 are illustrated as including certain features, it will be understood that other types of sensor systems are contemplated within the scope of the present disclosure. Further, vehicle 200 can include any of the components described in connection with vehicle 100 of Figure 1.

In an example configuration, one or more radars can be located on vehicle 200. Similar to radar 126 described above, the one or more radars may include antennas configured to transmit and receive radio waves (e.g., electromagnetic waves having frequencies between 30 Hz and 300 GHz). Such radio waves may be used to determine the distance to and/or velocity of one or more objects in the surrounding environment of vehicle 200. For example, one or more sensor systems 202, 204, 206, 208, 210, 212, 214, and/or 218 could include one or more radars. In some examples, one or more radars can be located near the rear of vehicle 200 (e.g., sensor systems 208 and 210), to actively scan the environment near the back of vehicle 200 for the presence of radio-reflective objects. Similarly, one or more radars can be located near the front of vehicle 200 (e.g., sensor systems 212 or 214) to actively scan the environment near the front of vehicle 200. A radar can be situated, for example, in a location suitable to illuminate a region including a forward-moving path of vehicle 200 without occlusion by other features of vehicle 200. For example, a radar can be embedded in and/or mounted in or near the front bumper, front headlights, cowl, and/or hood, etc. Furthermore, one or more additional radars can be located to actively scan the side and/or rear of vehicle 200 for the presence of radio-reflective objects, such as by including such devices in or near the rear bumper, side panels, rocker panels, and/or undercarriage, etc.

Vehicle 200 can include one or more cameras. For example, the one or more sensor systems 202, 204, 206, 208, 210, 212, 214, and/or 218 could include one or more cameras. The camera can be a photosensitive instrument, such as a still camera, a video camera, a thermal imaging camera, a stereo camera, a night vision camera, etc., that is configured to capture a plurality of images of the surrounding environment of vehicle 200. To this end, the camera can be configured to detect visible light, and can additionally or alternatively be configured to detect light from other portions of the spectrum, such as infrared or ultraviolet light. The camera can be a two-dimensional detector, and can optionally have a three-dimensional spatial range of sensitivity. In some embodiments, the camera can include, for example, a range detector configured to generate a two-dimensional image indicating distance from the camera to a number of points in the surrounding environment. To this end, the camera may use one or more range detecting techniques. For example, the camera can provide range information by using a structured light technique in which vehicle 200 illuminates an object in the surrounding environment with a predetermined light pattern, such as a grid or checkerboard pattern and uses the camera to detect a reflection of the predetermined light pattern from environmental surroundings. Based on distortions in the reflected light pattern, vehicle 200 can determine the distance to the points on the object. The predetermined light pattern may comprise infrared light, or radiation at other suitable wavelengths for such measurements. In some examples, the camera can be mounted inside the front windshield of vehicle 200. Specifically, the camera can be situated to capture images from a forward-looking view with respect to the orientation of vehicle 200. Other mounting locations and viewing angles of the camera can also be used, either inside or outside vehicle 200. Further, the camera can have associated optics operable to provide an adjustable field of view. Still further, the camera can be mounted to vehicle 200 with a movable mount to vary a pointing angle of the camera, such as via a pan/tilt mechanism.

Vehicle 200 may also include one or more acoustic sensors (e.g., one or more of sensor systems 202, 204, 206, 208, 210, 212, 214, 216, 218 may include one or more acoustic sensors) used to sense a surrounding environment of vehicle 200. Acoustic sensors may include microphones (e.g., piezoelectric microphones, condenser microphones, ribbon microphones, or microelectromechanical systems (MEMS) microphones) used to sense acoustic waves (i.e., pressure differentials) in a fluid (e.g., air) of the environment that is surrounding vehicle 200. Such acoustic sensors may be used to identify sounds in the surrounding environment (e.g., sirens, human speech, animal sounds, or alarms) upon which control strategy for vehicle 200 may be based. For example, if the acoustic sensor detects a siren (e.g., an ambulatory siren or a fire engine siren), vehicle 200 may slow down and/or navigate to the edge of a roadway.

Although not shown in Figures 2A-2E, vehicle 200 can include a wireless communication system (e.g., similar to the wireless communication system 146 of Figure 1 and/or in addition to the wireless communication system 146 of Figure 1). The wireless communication system may include wireless transmitters and receivers that could be configured to communicate with devices external or internal to vehicle 200. Specifically, the wireless communication system could include transceivers configured to communicate with other vehicles and/or computing devices, for instance, in a vehicular communication system or a roadway station. Examples of such vehicular communication systems include DSRC, radio frequency identification (RFID), and other proposed communication standards directed towards intelligent transport systems.

Vehicle 200 may include one or more other components in addition to or instead of those shown. The additional components may include electrical or mechanical functionality.

A control system of vehicle 200 may be configured to control vehicle 200 in accordance with a control strategy from among multiple possible control strategies. The control system may be configured to receive information from sensors coupled to vehicle 200 (on or off vehicle 200), modify the control strategy (and an associated driving behavior) based on the information, and control vehicle 200 in accordance with the modified control strategy. The control system further may be configured to monitor the information received from the sensors, and continuously evaluate driving conditions; and also may be configured to modify the control strategy and driving behavior based on changes in the driving conditions. For example, a route taken by a vehicle from one destination to another may be modified based on driving conditions. Additionally or alternatively, the velocity, acceleration, turn angle, follow distance (i.e., distance to a vehicle ahead of the present vehicle), lane selection, etc. could all be modified in response to changes in the driving conditions.

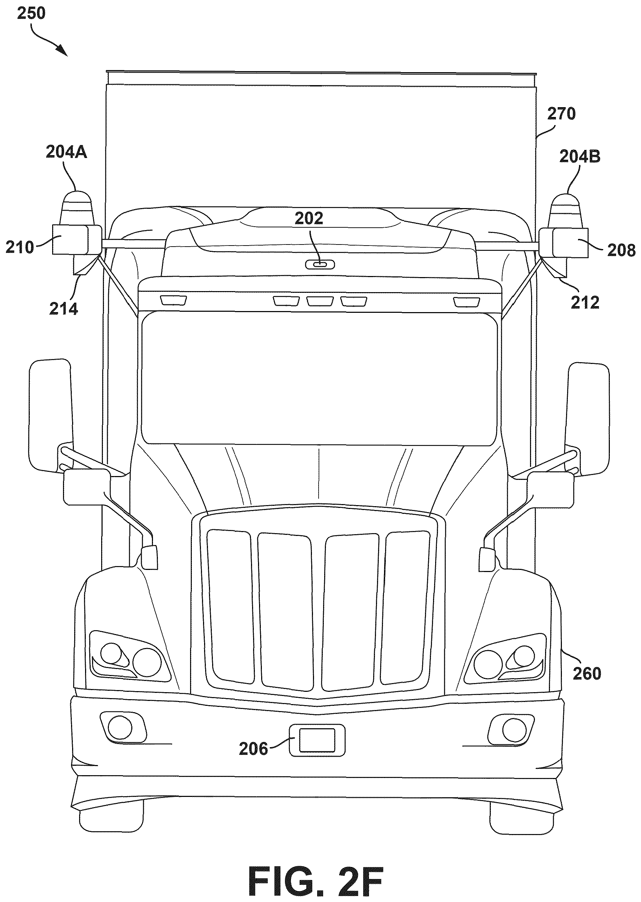

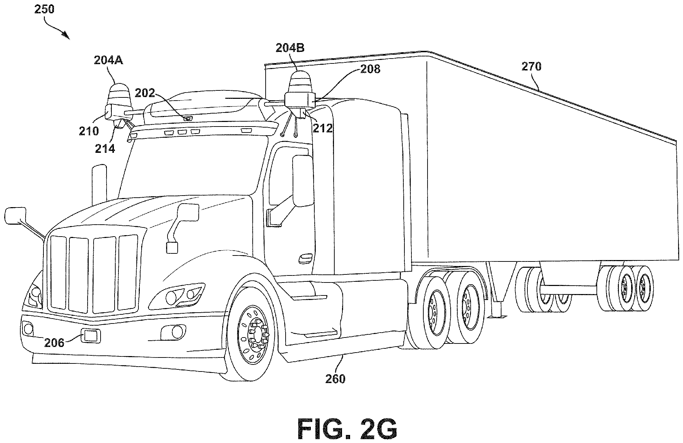

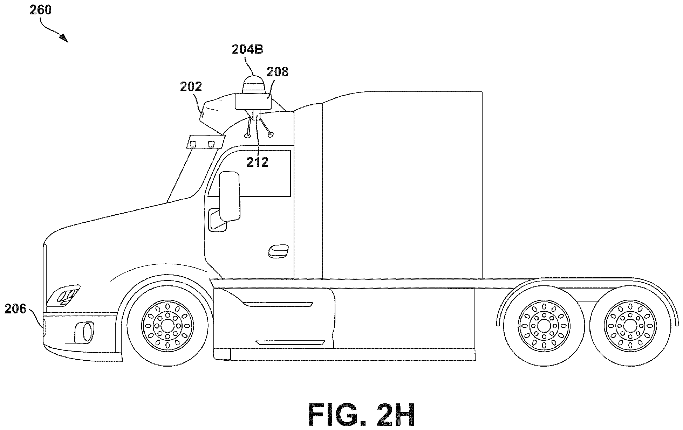

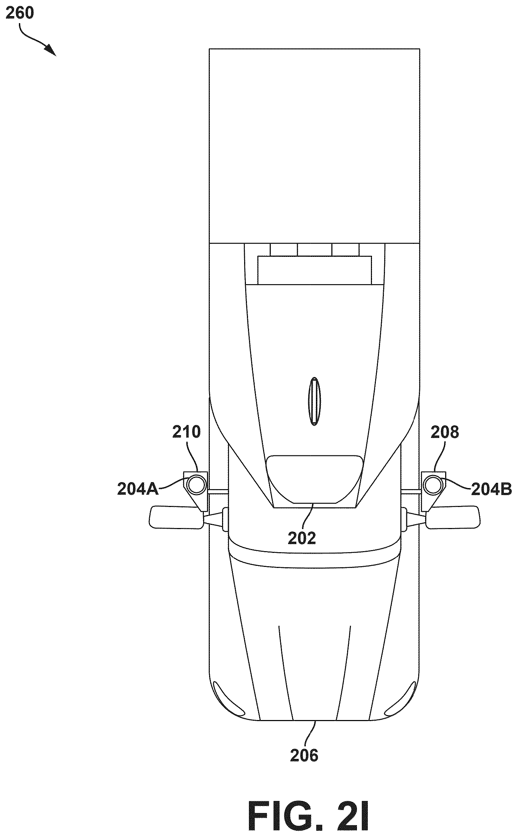

As described above, in some embodiments, vehicle 200 may take the form of a van, but alternate forms are also possible and are contemplated herein. As such, Figures 2F-2I illustrate embodiments where vehicle 250 takes the form of a semi-truck. For example, Figure 2F illustrates a front-view of vehicle 250 and Figure 2G illustrates an isometric view of vehicle 250. In embodiments where vehicle 250 is a semi-truck, vehicle 250 may include tractor portion 260 and trailer 270 (illustrated in Figure 2G). Figures 2H and 2I provide a side view and a top view, respectively, of the tractor portion 260. Similar to vehicle 200 illustrated above, vehicle 250 illustrated in Figures 2F-2I may also include a variety of sensor systems (e.g., similar to the sensor systems 202, 206, 208, 210, 212, 214 shown and described with reference to Figures 2A-2E). In some embodiments, whereas vehicle 200 of Figures 2A-2E may only include a single copy of some sensor systems (e.g., sensor system 204), vehicle 250 illustrated in Figures 2F-2I may include multiple copies of that sensor system (e.g., sensor systems 204A and 204B, as illustrated).

While drawings and description throughout may reference a given form of vehicle (e.g., semi-truck vehicle 250 or vehicle 200 shown as a van), it is understood that embodiments described herein can be equally applied in a variety of vehicle contexts (e.g., with modifications employed to account for a form factor of vehicle). For example, sensors and/or other components described or illustrated as being part of vehicle 200 could also be used (e.g., for navigation and/or obstacle detection and avoidance) in semi-truck vehicle 250

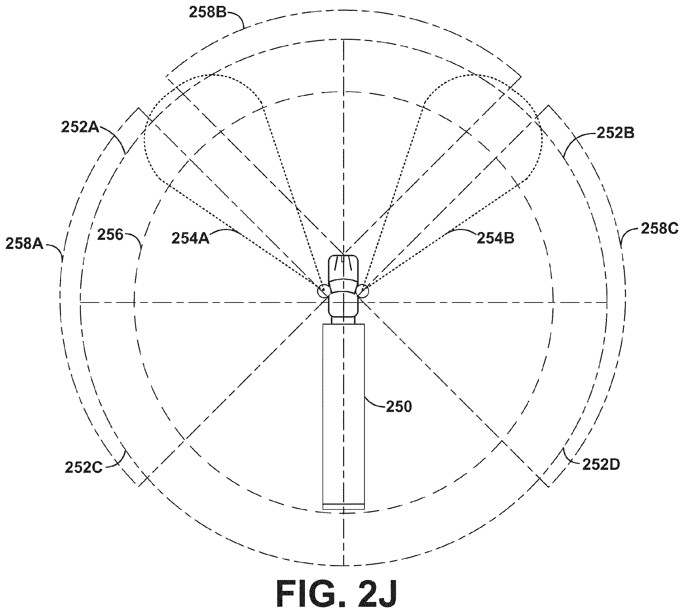

Figure 2J illustrates various sensor fields of view (e.g., associated with vehicle 250 described above). As described above, vehicle 250 may contain a plurality of sensors / sensor units. The locations of the various sensors may correspond to the locations of the sensors disclosed in Figures 2F-2I, for example. However, in some instances, the sensors may have other locations. Sensors location reference numbers are omitted from Figure 2J for simplicity of the drawing. For each sensor unit of vehicle 250, Figure 2J illustrates a representative field of view (e.g., fields of view labeled as 252A, 252B, 252C, 252D, 254A, 254B, 256, 258A, 258B, and 258C). The field of view of a sensor may include an angular region (e.g., an azimuthal angular region and/or an elevational angular region) over which the sensor may detect objects.

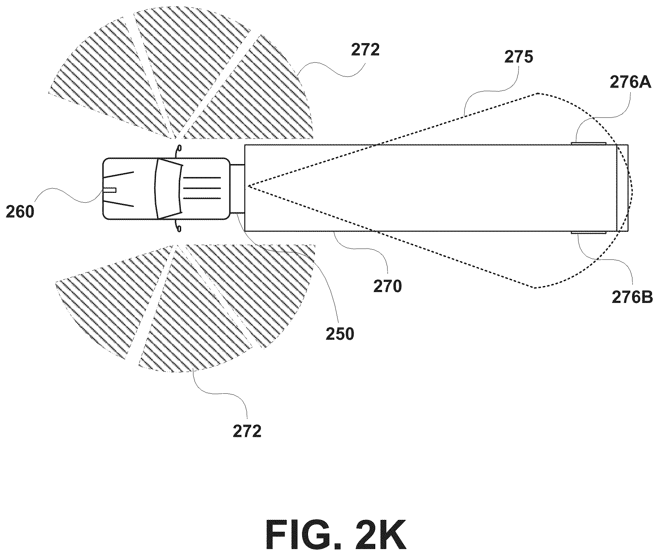

Figure 2K illustrates beam steering for a sensor of a vehicle (e.g., vehicle 250 shown and described with reference to Figures 2F-2J), according to example embodiments. In various embodiments, a sensor unit of vehicle 250 may be a radar, a lidar, a sonar, etc. Further, in some embodiments, during the operation of the sensor, the sensor may be scanned within the field of view of the sensor. Various different scanning angles for an example sensor are shown as regions 272, which each indicate the angular region over which the sensor is operating. The sensor may periodically or iteratively change the region over which it is operating. In some embodiments, multiple sensors may be used by vehicle 250 to measure regions 272. In addition, other regions may be included in other examples. For instance, one or more sensors may measure aspects of the trailer 270 of vehicle 250 and/or a region directly in front of vehicle 250.

At some angles, region of operation 275 of the sensor may include rear wheels 276A, 276B of trailer 270. Thus, the sensor may measure rear wheel 276A and/or rear wheel 276B during operation. For example, rear wheels 276A, 276B may reflect lidar signals or radar signals transmitted by the sensor. The sensor may receive the reflected signals from rear wheels 276A, 276. Therefore, the data collected by the sensor may include data from the reflections off the wheel.

In some instances, such as when the sensor is a radar, the reflections from rear wheels 276A, 276B may appear as noise in the received radar signals. Consequently, the radar may operate with an enhanced signal to noise ratio in instances where rear wheels 276A, 276B direct radar signals away from the sensor.

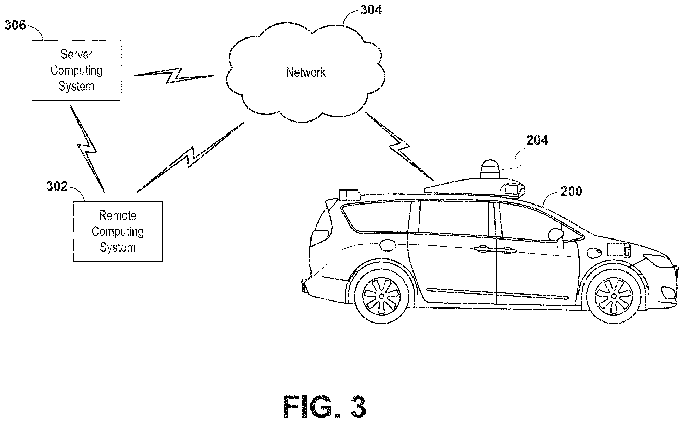

Figure 3 is a conceptual illustration of wireless communication between various computing systems related to an autonomous or semi-autonomous vehicle, according to example embodiments. In particular, wireless communication may occur between remote computing system 302 and vehicle 200 via network 304. Wireless communication may also occur between server computing system 306 and remote computing system 302, and between server computing system 306 and vehicle 200.

Vehicle 200 can correspond to various types of vehicles capable of transporting passengers or objects between locations, and may take the form of any one or more of the vehicles discussed above. In some instances, vehicle 200 may operate in an autonomous or semi-autonomous mode that enables a control system to safely navigate vehicle 200 between destinations using sensor measurements. When operating in an autonomous or semi-autonomous mode, vehicle 200 may navigate with or without passengers. As a result, vehicle 200 may pick up and drop off passengers between desired destinations.

Remote computing system 302 may represent any type of device related to remote assistance techniques, including but not limited to those described herein. Within examples, remote computing system 302 may represent any type of device configured to (i) receive information related to vehicle 200, (ii) provide an interface through which a human operator can in turn perceive the information and input a response related to the information, and (iii) transmit the response to vehicle 200 or to other devices. Remote computing system 302 may take various forms, such as a workstation, a desktop computer, a laptop, a tablet, a mobile phone (e.g., a smart phone), and/or a server. In some examples, remote computing system 302 may include multiple computing devices operating together in a network configuration.

Remote computing system 302 may include one or more subsystems and components similar or identical to the subsystems and components of vehicle 200. At a minimum, remote computing system 302 may include a processor configured for performing various operations described herein. In some embodiments, remote computing system 302 may also include a user interface that includes input/output devices, such as a touchscreen and a speaker. Other examples are possible as well.

Network 304 represents infrastructure that enables wireless communication between remote computing system 302 and vehicle 200. Network 304 also enables wireless communication between server computing system 306 and remote computing system 302, and between server computing system 306 and vehicle 200.

The position of remote computing system 302 can vary within examples. For instance, remote computing system 302 may have a remote position from vehicle 200 that has wireless communication via network 304. In another example, remote computing system 302 may correspond to a computing device within vehicle 200 that is separate from vehicle 200, but with which a human operator can interact while a passenger or driver of vehicle 200. In some examples, remote computing system 302 may be a computing device with a touchscreen operable by the passenger of vehicle 200.

In some embodiments, operations described herein that are performed by remote computing system 302 may be additionally or alternatively performed by vehicle 200 (i.e., by any system(s) or subsystem(s) of vehicle 200). In other words, vehicle 200 may be configured to provide a remote assistance mechanism with which a driver or passenger of the vehicle can interact.

Server computing system 306 may be configured to wirelessly communicate with remote computing system 302 and vehicle 200 via network 304 (or perhaps directly with remote computing system 302 and/or vehicle 200). Server computing system 306 may represent any computing device configured to receive, store, determine, and/or send information relating to vehicle 200 and the remote assistance thereof. As such, server computing system 306 may be configured to perform any operation(s), or portions of such operation(s), that is/are described herein as performed by remote computing system 302 and/or vehicle 200. Some embodiments of wireless communication related to remote assistance may utilize server computing system 306, while others may not.

Server computing system 306 may include one or more subsystems and components similar or identical to the subsystems and components of remote computing system 302 and/or vehicle 200, such as a processor configured for performing various operations described herein, and a wireless communication interface for receiving information from, and providing information to, remote computing system 302 and vehicle 200.

The various systems described above may perform various operations. These operations and related features will now be described.

In line with the discussion above, a computing system (e.g., remote computing system 302, server computing system 306, or a computing system local to vehicle 200) may operate to use a camera to capture images of the surrounding environment of an autonomous or semi-autonomous vehicle. In general, at least one computing system will be able to analyze the images and possibly control the autonomous or semi-autonomous vehicle.

In some embodiments, to facilitate autonomous or semi-autonomous operation, a vehicle (e.g., vehicle 200) may receive data representing objects in an environment surrounding the vehicle (also referred to herein as "environment data") in a variety of ways. A sensor system on the vehicle may provide the environment data representing objects of the surrounding environment. For example, the vehicle may have various sensors, including a camera, a radar, a lidar, a microphone, a radio unit, and other sensors. Each of these sensors may communicate environment data to a processor in the vehicle about information each respective sensor receives.

In one example, a camera may be configured to capture still images and/or video. In some embodiments, the vehicle may have more than one camera positioned in different orientations. Also, in some embodiments, the camera may be able to move to capture images and/or video in different directions. The camera may be configured to store captured images and video to a memory for later processing by a processing system of the vehicle. The captured images and/or video may be the environment data. Further, the camera may include an image sensor as described herein.

In another example, a radar may be configured to transmit an electromagnetic signal that will be reflected by various objects near the vehicle, and then capture electromagnetic signals that reflect off the objects. The captured reflected electromagnetic signals may enable the radar (or processing system) to make various determinations about objects that reflected the electromagnetic signal. For example, the distances to and positions of various reflecting objects may be determined. In some embodiments, the vehicle may have more than one radar in different orientations. The radar may be configured to store captured information to a memory for later processing by a processing system of the vehicle. The information captured by the radar may be environmental data.

In another example, a lidar may be configured to transmit an electromagnetic signal (e.g., infrared light, such as that from a gas or diode laser, or other possible light source) that will be reflected by target objects near the vehicle. The lidar may be able to capture the reflected electromagnetic (e.g., infrared light) signals. The captured reflected electromagnetic signals may enable the range-finding system (or processing system) to determine a range to various objects. The lidar may also be able to determine a velocity or speed of target objects and store it as environment data.

Additionally, in an example, a microphone may be configured to capture audio of the environment surrounding the vehicle. Sounds captured by the microphone may include emergency vehicle sirens and the sounds of other vehicles. For example, the microphone may capture the sound of the siren of an ambulance, fire engine, or police vehicle. A processing system may be able to identify that the captured audio signal is indicative of an emergency vehicle. In another example, the microphone may capture the sound of an exhaust of another vehicle, such as that from a motorcycle. A processing system may be able to identify that the captured audio signal is indicative of a motorcycle. The data captured by the microphone may form a portion of the environment data.

In yet another example, the radio unit may be configured to transmit an electromagnetic signal that may take the form of a Bluetooth signal, 802.11 signal, and/or other radio technology signal. The first electromagnetic radiation signal may be transmitted via one or more antennas located in a radio unit. Further, the first electromagnetic radiation signal may be transmitted with one of many different radio-signaling modes. However, in some embodiments it is desirable to transmit the first electromagnetic radiation signal with a signaling mode that requests a response from devices located near the autonomous or semi-autonomous vehicle. The processing system may be able to detect nearby devices based on the responses communicated back to the radio unit and use this communicated information as a portion of the environment data.

In some embodiments, the processing system may be able to combine information from the various sensors in order to make further determinations of the surrounding environment of the vehicle. For example, the processing system may combine data from both radar information and a captured image to determine if another vehicle or pedestrian is in front of the autonomous or semi-autonomous vehicle. In other embodiments, other combinations of sensor data may be used by the processing system to make determinations about the surrounding environment.

While operating in an autonomous mode (or semi-autonomous mode), the vehicle may control its operation with little-to-no human input. For example, a human-operator may enter an address into the vehicle and the vehicle may then be able to drive, without further input from the human (e.g., the human does not have to steer or touch the brake/gas pedals), to the specified destination. Further, while the vehicle is operating autonomously or semi-autonomously, the sensor system may be receiving environment data. The processing system of the vehicle may alter the control of the vehicle based on environment data received from the various sensors. In some examples, the vehicle may alter a velocity of the vehicle in response to environment data from the various sensors. The vehicle may change velocity in order to avoid obstacles, obey traffic laws, etc. When a processing system in the vehicle identifies objects near the vehicle, the vehicle may be able to change velocity, or alter the movement in another way.

When the vehicle detects an object but is not highly confident in the detection of the object, the vehicle can request a human operator (or a more powerful computer) to perform one or more remote assistance tasks, such as (i) confirm whether the object is in fact present in the surrounding environment (e.g., if there is actually a stop sign or if there is actually no stop sign present), (ii) confirm whether the vehicle's identification of the object is correct, (iii) correct the identification if the identification was incorrect, and/or (iv) provide a supplemental instruction (or modify a present instruction) for the autonomous or semi-autonomous vehicle. Remote assistance tasks may also include the human operator providing an instruction to control operation of the vehicle (e.g., instruct the vehicle to stop at a stop sign if the human operator determines that the object is a stop sign), although in some scenarios, the vehicle itself may control its own operation based on the human operator's feedback related to the identification of the object.

To facilitate this, the vehicle may analyze the environment data representing objects of the surrounding environment to determine at least one object having a detection confidence below a threshold. A processor in the vehicle may be configured to detect various objects of the surrounding environment based on environment data from various sensors. For example, in one embodiment, the processor may be configured to detect objects that may be important for the vehicle to recognize. Such objects may include pedestrians, bicyclists, street signs, other vehicles, indicator signals on other vehicles, and other various objects detected in the captured environment data.

The detection confidence may be indicative of a likelihood that the determined object is correctly identified in the surrounding environment, or is present in the surrounding environment. For example, the processor may perform object detection of objects within image data in the received environment data, and determine that at least one object has the detection confidence below the threshold based on being unable to identify the object with a detection confidence above the threshold. If a result of an object detection or object recognition of the object is inconclusive, then the detection confidence may be low or below the set threshold.

The vehicle may detect objects of the surrounding environment in various ways depending on the source of the environment data. In some embodiments, the environment data may come from a camera and be image or video data. In other embodiments, the environment data may come from a lidar. The vehicle may analyze the captured image or video data to identify objects in the image or video data. The methods and apparatuses may be configured to monitor image and/or video data for the presence of objects of the surrounding environment. In other embodiments, the environment data may be radar, audio, or other data. The vehicle may be configured to identify objects of the surrounding environment based on the radar, audio, or other data.

In some embodiments, the techniques the vehicle uses to detect objects may be based on a set of known data. For example, data related to environmental objects may be stored to a memory located in the vehicle. The vehicle may compare received data to the stored data to determine objects. In other embodiments, the vehicle may be configured to determine objects based on the context of the data. For example, street signs related to construction may generally have an orange color. Accordingly, the vehicle may be configured to detect objects that are orange, and located near the side of roadways as construction-related street signs. Additionally, when the processing system of the vehicle detects objects in the captured data, it also may calculate a confidence for each object.

Further, the vehicle may also have a confidence threshold. The confidence threshold may vary depending on the type of object being detected. For example, the confidence threshold may be lower for an object that may require a quick responsive action from the vehicle, such as brake lights on another vehicle. However, in other embodiments, the confidence threshold may be the same for all detected objects. When the confidence associated with a detected object is greater than the confidence threshold, the vehicle may assume the object was correctly recognized and responsively adjust the control of the vehicle based on that assumption.

When the confidence associated with a detected object is less than the confidence threshold, the actions that the vehicle takes may vary. In some embodiments, the vehicle may react as if the detected object is present despite the low confidence level. In other embodiments, the vehicle may react as if the detected object is not present.

When the vehicle detects an object of the surrounding environment, it may also calculate a confidence associated with the specific detected object. The confidence may be calculated in various ways depending on the embodiment. In one example, when detecting objects of the surrounding environment, the vehicle may compare environment data to predetermined data relating to known objects. The closer the match between the environment data and the predetermined data, the higher the confidence. In other embodiments, the vehicle may use mathematical analysis of the environment data to determine the confidence associated with the objects.

In response to determining that an object has a detection confidence that is below the threshold, the vehicle may transmit, to the remote computing system, a request for remote assistance with the identification of the object. As discussed above, the remote computing system may take various forms. For example, the remote computing system may be a computing device within the vehicle that is separate from the vehicle, but with which a human operator can interact while a passenger or driver of the vehicle, such as a touchscreen interface for displaying remote assistance information. Additionally or alternatively, as another example, the remote computing system may be a remote computer terminal or other device that is located at a location that is not near the vehicle.

The request for remote assistance may include the environment data that includes the object, such as image data, audio data, etc. The vehicle may transmit the environment data to the remote computing system over a network (e.g., network 304), and in some embodiments, via a server (e.g., server computing system 306). The human operator of the remote computing system may in turn use the environment data as a basis for responding to the request.

In some embodiments, when the object is detected as having a confidence below the confidence threshold, the object may be given a preliminary identification, and the vehicle may be configured to adjust the operation of the vehicle in response to the preliminary identification. Such an adjustment of operation may take the form of stopping the vehicle, switching the vehicle to a human-controlled mode, changing the velocity of the vehicle (e.g., a speed and/or direction), among other possible adjustments.

In other embodiments, even if the vehicle detects an object having a confidence that meets or exceeds the threshold, the vehicle may operate in accordance with the detected object (e.g., come to a stop if the object is identified with high confidence as a stop sign), but may be configured to request remote assistance at the same time as (or at a later time from) when the vehicle operates in accordance with the detected object.

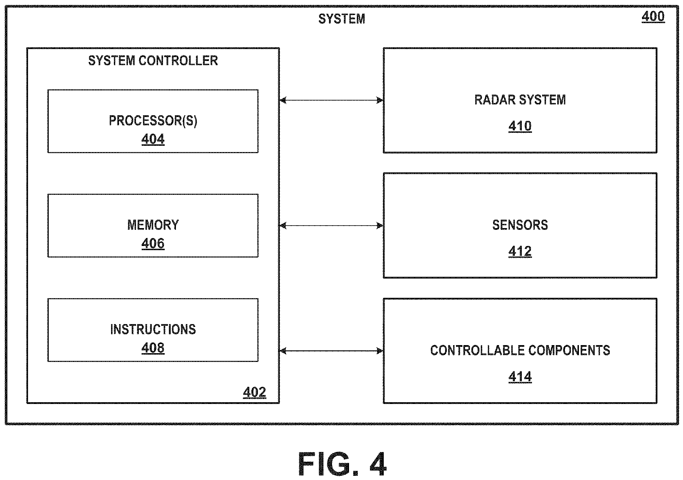

Figure 4 is a block diagram of a system, according to example embodiments. In particular, Figure 4 shows system 400 that includes system controller 402, radar system 410, sensors 412, and controllable components 414. System controller 402 includes processor(s) 404, memory 406, and instructions 408 stored on memory 406 and executable by processor(s) 404 to perform functions, such as the operations disclosed herein.

Processor(s) 404 can include one or more processors, such as one or more general-purpose microprocessors (e.g., having a single core or multiple cores) and/or one or more special purpose microprocessors. The one or more processors may include, for instance, one or more central processing units (CPUs), one or more microcontrollers, one or more graphical processing units (GPUs), one or more tensor processing units (TPUs), one or more ASICs, and/or one or more field-programmable gate arrays (FPGAs). Other types of processors, computers, or devices configured to carry out software instructions are also contemplated herein.

Memory 406 may include a computer-readable medium, such as a non-transitory, computer-readable medium, which may include without limitation, read-only memory (ROM), programmable read-only memory (PROM), erasable programmable read-only memory (EPROM), electrically erasable programmable read-only memory (EEPROM), non-volatile random-access memory (e.g., flash memory), a solid state drive (SSD), a hard disk drive (HDD), a Compact Disc (CD), a Digital Video Disk (DVD), a digital tape, read/write (R/W) CDs, R/W DVDs, etc.

Radar system 410 can be used in autonomous or semi-autonomous vehicles for navigation and object detection by using radio waves to detect and measure the distance, speed, and direction of objects in the surrounding environment. Radar system 410 can include one or multiple radar units, which each consists of a radar transmitter that emits radio waves and a radar receiver that captures the reflected waves from objects. By analyzing the time it takes for the waves to return and their frequency shifts (Doppler Effect), radar system 410 can determine the presence, location, and movement of objects.

In the context of autonomous or semi-autonomous vehicles, radar system 410 provides measurements that can assist with navigation and collision avoidance. Radar units are typically mounted on the vehicle's exterior, such as the front, rear, and sides. During navigation, radar system 410 may continuously emit radio waves in various directions, scanning the environment around the vehicle. When the waves encounter an object, they bounce back to a radar receiver, thereby enabling radar system 410 to analyze the reflected waves to calculate the distance, relative speed, and angle of the object. This information can be used by the vehicle's control system to make decisions and adjust the vehicle's trajectory accordingly, enabling it to detect and react to obstacles, pedestrians, vehicles, and other potential hazards in its path. By providing real-time data about the surrounding environment, radar system 410 can enhance the vehicle's perception capabilities and contribute to safer and more reliable navigation.

Radar system 410 offers operational benefits over other types of sensors in some aspects, such as cameras and lidar. Radar can perform well in adverse weather conditions, such as rain, fog, or dust, where other sensors might be limited. In particular, radio waves emitted by radar system 410 can penetrate these adverse conditions and provide reliable object detection. This makes radar particularly useful for enhancing the robustness and safety of autonomous or semi-autonomous vehicles in various weather scenarios. In addition, radar also excels at detecting the velocity and relative speed of nearby objects, which is useful for assessing the movement of surrounding vehicles, pedestrians, and other obstacles. By providing accurate speed information, radar system 410 enables the vehicle (or a driver of the vehicle) to make informed decisions about potential collision risks and adjust its behavior accordingly. In some cases, radar system 410 can also offer a longer range of measurements and broader field of view when compared to other sensors coupled to the vehicle.

Similarly, system controller 402 may use outputs from radar system 410 and sensors 412 to determine the characteristics of system 400 and/or characteristics of the surrounding environment. For example, sensors 412 may include one or more of a GPS, an IMU, an image capture device (e.g., a camera), a light sensor, a heat sensor, one or more lidar devices, and other sensors indicative of parameters relevant to system 400 and/or the surrounding environment. Radar system 410 is depicted as separate from sensors 412 for purposes of example, and may be considered as part of or as sensors 412 in some examples.

Based on characteristics of system 400 and/or the surrounding environment determined by system controller 402 based on the outputs from radar system 410 and the sensors 412, system controller 402 may control the controllable components 414 to perform one or more actions. For example, system 400 may correspond to a vehicle, in which case the controllable components 414 may include a braking system, a turning system, and/or an accelerating system of the vehicle, and system controller 402 may change aspects of these controllable components based on characteristics determined from radar system 410 and/or sensors 412 (e.g., when system controller 402 controls the vehicle in an autonomous or semi-autonomous mode). Within examples, radar system 410 and sensors 412 are also controllable by system controller 402.

Radar system 410 and sensors 412 can be used to detect and interpret the surrounding environment during vehicle navigation. In some cases, however, the performance of radar system 410 and/or sensors 412 can experience data loss for at least a threshold duration, which may trigger action by system 400. In some cases, sensor degradation may lead to anomalous driving behavior by an autonomous or semi-autonomous vehicle using radar system 410, as the vehicle systems may not accurately perceive the environment due to the degraded radar performance.

To address potential effects on radar data and/or other types of sensor data, disclosed solutions may be performed by one or more vehicle systems to estimate the sensitivity and performance of vehicle sensors, including radar. For instance, system 400 may receive radar data representing an environment of a vehicle from a radar coupled to the vehicle and detect, based on the radar data, one or more objects located in the environment. System 400 may also filter the radar data corresponding to the one or more objects based on a set of predetermined criteria to identify a particular object that corresponds to a first type of object. System 400 may then perform a comparison between a radar parameter determined based on radar data corresponding to the particular object and an expected radar parameter represented by a data model. The data model may be generated based on radar data aggregated for a plurality of objects that match the first type of object. System 400 may then estimate radar sensitivity loss for the radar based on the comparison and perform one or more actions when the loss exceeds one or multiple thresholds.

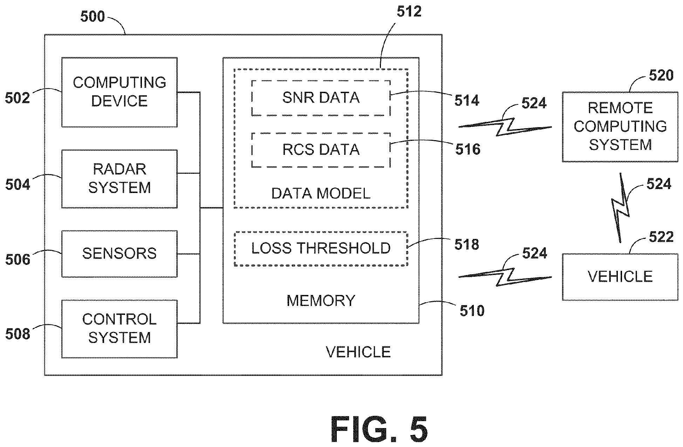

Figure 5 is a conceptual illustration of a system for estimating the sensitivity and performance of vehicle radar and other types of vehicle sensors. In the example embodiment, the system includes vehicle 500, remote computing system 520, and vehicle 522 and may include additional entities not shown in Figure 5. Vehicle 500 includes computing device 502, radar system 504, sensors 506, control system 508, and memory 510. Memory 510 is illustrated storing data model 512 and loss threshold 518 and can be used to store additional information as well, such as instructions to perform operations disclosed herein. The elements of the system depicted in Figure 5 are shown for illustration purposes and may include more or fewer elements within other examples. For instance, remote computing system 520 and vehicle 522 may each represent any number of computing systems and vehicles, respectively.

In some aspects, vehicle 500 may enhance the safety and reliability of its autonomous operations and/or ADAS operations by evaluating the performance of radars within radar system 504 in real-time during navigation. For instance, computing device 502 may perform operations described herein to detect changes in the quality of radar data (or another type of sensor data) and determine whether these detected changes should trigger some type of corrective action by vehicle systems. In some cases, computing device 502 may detect that signal loss has temporarily reduced the maximum sensing ranges of one or multiple sensors used by vehicle 500. In response, computing device 502 and/or control system 508 decrease the speed and handling of vehicle 500 or perform other corrective actions that factor the reduced sensor performance. In some instances, computing device 502 may provide one or multiple alerts, such as to remote computing system 520 or vehicle 522 via wireless communication 524. For instance, vehicle 500 may use disclosed techniques to determine when one or multiple radars within radar system 504 are operating in a degraded state, which can be due to various factors like weather conditions, radome condition, and/or hardware condition, etc. Vehicle 500 may then provide alerts, adjust constant false alarm rate (CFAR) detection thresholds, trigger cleaning operations at sensors, and/or perform other operational modifications like slowing down, increasing following distances relative to other vehicles (e.g., vehicle 522), and applying brakes earlier in some situations.

In the example shown in Figure 5, vehicle 500 and vehicle 522 represent any type of mobile machine designed to transport passengers or cargo from one location to another. For instance, vehicle 500 may be a car, truck, bus, semi-truck, construction vehicle, or another type of mobile machine. In some cases, vehicle 500 may be a robotic device or another specialized vehicle. In some examples, vehicle 500 is an autonomous or semi-autonomous vehicle that uses sensor data from radar system 504 and sensors 506 to understand the surrounding environment to safely navigate between locations. Vehicle 500 and vehicle 522 may be capable of autonomous navigation, manual navigation, or a combination of autonomous and manual navigation. For instance, a driver may be able to transition vehicle 500 between an autonomous operation mode where vehicle 500 navigates safely to a destination while receiving little or no input from the driver and a manual mode where the driver is able to control vehicle 500.

Computing device 502 controls one or more operational aspects of vehicle 500. Computing device 502 may represent one or more computing devices configured to perform operations for vehicle 500, including methods described herein. In some aspects, computing device 502 includes one or multiple processors and memory. The memory may store instructions that, when executed by one or multiple processors, cause computing device 502 to perform various operations, including operations related to estimating and evaluating the sensitivity and performance of radar system 504 and sensors 506. This memory may be memory 510, another memory specific to computing device 502, and/or a memory positioned remote from vehicle 500 (e.g., memory located at remote computing system 520). The operations performed by computing device 502 may include receiving radar data representing an environment of vehicle 500 from a radar coupled to vehicle 500 and identifying, based on the radar data, one or more objects located in the environment that correspond to a particular type of object. Computing device 502 may then filter the radar data corresponding to the one or more objects based on a set of predetermined criteria (e.g., range, line of sight, and/or size) and perform a comparison between one or multiple radar parameters determined based on the filtered radar data corresponding to the one or more objects and expected radar parameters represented by a data model (e.g., data model 512). Data model 512 is generated based on radar data aggregated for multiple objects that match the particular type of object. Computing device 502 may then estimate radar sensitivity loss for the radar based on the comparison.

Computing device 502 may receive radar data generated by radar system 504 that measures the surrounding environment of vehicle 500. The radar data may be provided by one or multiple radars that are part of radar system 504 and can be processed in various formats, such as radar images. For instance, radar system 504 may output radar data in the form of range-Doppler maps (RDMs), which are two-dimensional representations that plot the distance of objects from the radar sensor against their relative velocity. The range dimension indicates how far away an object is while the Doppler dimension shows whether the object is moving towards or away from the radar and at what speed. RDMs may be used to detect and track objects moving in the environment, such as other vehicles (e.g., vehicle 522), pedestrians, and cyclists. In some cases, radar data may take the form of range-angle images, which provide a two-dimensional view where one axis represents the distance to the target and the other represents the angle of arrival of the radar signal. Range-angle images may be useful for determining the azimuth or bearing of objects relative to vehicle 500, which can help in creating a spatial map of the environment around vehicle 500. Radar data may also be received in other formats, such as voxels.

Computing device 502 may also receive and use sensor data provided by sensors 506, which may include cameras, lidars, temperature sensors, wind sensors, humidity sensors, inertial measurement units (IMUs) and/or ultrasonic sensors, among other possible types. Sensors 506 may output data that measures various environmental and weather conditions, such as temperature, humidity, wind speed, visibility, rain, fog, or snow. As such, computing device 502 and control system 508 may use sensor data from radar system 504 and/or sensors 506 to safely and effectively navigate dynamic environments.

Control system 508 may be used to manage and regulate the operations of vehicle 500. In some examples, control system 508 and computing device 502 may be part of a computing system used to perform various operations for vehicle 500, including determining and executing control strategy based on sensor measurements of the surrounding environment. As such, control system 508 may perform a wide range of functions, from basic vehicle maneuvers to complex decision-making processes for autonomous or semi-autonomous navigation. In some aspects, control system 508 may perform functions, such as steering control, acceleration and braking, stability and traction control, navigation and route planning, and obstacle detection and avoidance. The components within control system 508 may include additional sensors, actuators, electronic control units (ECUs), and communication networks. In some examples, control system 508 may work with computing device 502 to process data from various sensors to perceive the environment, make complex decisions based on the data, and control movements of vehicle 500 accordingly. Control system 508 may also continuously monitor performance and safety parameters to ensure vehicle 500 operates within safe limits.

Computing device 502 and other vehicle systems may use memory 510, which can be used to store data and models. In the example, memory 510 is shown storing data model 512 and loss threshold 518 as well as other information. Data model 512 may convey expected radar parameters arranged according to types of objects, including SNR data 514 and RCS data 516 expected for each type of object. In some examples, data model 512 represents expected SNR values (shown as SNR data 514) and RCS values (shown as RCS data 516) organized by object type and range in clear weather conditions when captured by an optimally working radar. Expected values can represent ranges and/or specific values in some examples.

Data model 512 may be trained using aggregated radar data provided by radars from a large number of vehicles. For instance, data model 512 may be developed using a large dataset of radar measurements collected from multiple vehicles equipped with optimally functioning radars that are positioned in a similar manner on each vehicle. This dataset of radar measurements may include SNR values and RCS values for various common object types, such as passenger vehicles, trucks, motorcycles, pedestrians, and static objects like road signs or barriers. The radar measurements may be collected under controlled conditions, specifically during clear weather to establish a baseline for optimal radar performance. The data collection may occur across different times of day and in various geographic locations to account for potential environmental variations. In some cases, the dataset of radar measurements may be updated over time, enabling updated models to be generated and distributed to vehicles. For instance, vehicles may continue to supply radar measurements that can be used to further train an updated version of data model 512. The data set of radar measurements can also be supplemented and/or validated using radar data generated by offline radar producing measurements in a radar chamber.

For each object type, data model 512 may aggregate SNR and RCS values as a function of range. This may involve collecting multiple measurements for each object type at different distances from a radar, which may range from very close proximity to the maximum effective range of the radar. Data model 512 may be trained on data gathered from radars at different radar mounting positions on vehicles, such as front, rear, and side-mounted radars. This allows data model 512 to account for variations in radar performance based on the radar's location and orientation on the vehicle. In some examples, statistical techniques may be applied to the aggregated data to derive expected SNR and RCS values for each object type at various ranges. This may include calculating mean values, standard deviations, and confidence intervals to capture the typical range of measurements for each object type and distance. Data model 512 may also account for a radar's specific characteristics, such as its operating frequency, beam width, and other relevant parameters. This allows data model 512 to be tailored to the performance expectations of particular radar hardware configurations.

Machine learning algorithms, such as regression models or neural networks, may be used to learn the relationships between object types, ranges, and expected SNR and RCS values. These algorithms can help capture complex patterns and dependencies in the data set of radar measurements. In addition, data model 512 may be validated using separate test datasets to ensure its accuracy and generalizability across different scenarios and radar configurations. This validation process may involve comparing the predictions of data model 512 with actual measurements from radars known to be functioning optimally. Periodic updates to data model 512 may be performed as new data becomes available, thereby enabling data model 512 to remain current with the latest radar technology and performance characteristics. This may involve retraining data model 512 with newly collected data or fine-tuning existing model parameters. By training data model 512 in this manner, remote computing system 520 or another computing system may establish a robust reference for expected radar performance under optimal conditions, which can then be used to identify deviations that may indicate radar sensitivity loss or other issues. In some examples, remote computing system 520 may train and distribute data model 512 to vehicle 500 and vehicle 522, which may involve using wireless communication 524.

Loss threshold 518 may represent one or multiple thresholds that can be used to evaluate radar dating, including estimated losses associated with radar system 504 and individual radars within radar system 504. For instance, computing device 502 may use one or multiple thresholds to evaluate an estimated radar loss to determine if corrective actions are needed.

In some cases, computing device 502 may compare the estimated radar loss to a single overall threshold value. This threshold may represent the maximum acceptable level of sensitivity loss before action is required for vehicle 500. If the estimated loss exceeds this threshold, computing device 502 may trigger alerts or initiate corrective actions, such as adjusting operations of vehicle 500, triggering a sensor cleaning action, and/or reducing how vehicle systems utilize radar data from radar system 504. In other cases, computing device 502 may use multiple thresholds to evaluate the estimated radar loss. These thresholds may correspond to different levels of sensitivity loss severity, such as low, moderate, and high. Each threshold may be associated with computing device 502 triggering specific actions or responses.

Loss threshold 518 may include one or more dynamic thresholds, which may be adjusted based on factors such as vehicle speed, weather conditions, and/or the specific radar's location on vehicle 500. For instance, the threshold for a forward-facing radar may be lower when the vehicle is traveling at high speeds, reflecting the increased value of long-range detection in such scenarios. As such, computing device 502 may apply different thresholds for different object types or ranges. For example, there may be stricter thresholds for sensitivity loss in detecting pedestrians at close range compared to detecting other vehicles at longer distances.

In some examples, computing device 502 may use time-based thresholds. For instance, a lower level of sensitivity loss may be acceptable for short durations, but if the lower level of sensitivity persists beyond a certain time threshold, it may trigger a more serious response. Computing device 502 may use statistical thresholds based on the historical performance of the radar. For example, computing device 502 may flag sensitivity loss that deviates significantly from the typical performance range of the radar, which may involve using measures like standard deviations from the mean. In some cases, computing device 502 may use relative thresholds that compare the performance of one radar to other radars on vehicle 500. For instance, when a radar shows significantly higher sensitivity loss compared to others in similar conditions, this may trigger an alert, even if the performance of the radar did not exceed an absolute threshold.

Computing device 502 may implement adaptive thresholds that adjust over time based on the performance history of the radar. This approach can help identify gradual degradation that might not trigger fixed thresholds. In addition, multiple thresholds may be used in combination to create a decision matrix when evaluating radar loss. For example, computing device 502 may consider both the magnitude of sensitivity loss and its duration when determining the appropriate response. The thresholds may also be linked to specific vehicle functions or safety features. Exceeding certain thresholds may lead to the gradual degradation of some features rather than immediate disablement by computing device 502, which may smooth the overall degradation of vehicle's 500 functionality. By using one or multiple thresholds in these ways, computing device 502 can provide a flexible and context-aware evaluation of estimated radar loss that enables computing device 502 to trigger appropriate responses to various levels of sensitivity degradation.

Computing device 502 may determine a real-time estimation of radar sensitivity degradation for radar system 504 overall in some cases. Computing device 502 may also evaluate the radar sensitivity degradation of individual radars operating as part of radar system 504. The real-time estimation may indicate the loss experienced by one or multiple radars, which enables immediate adjustments to be made to radar system 504, individual radars within radar system 504, and/or the control strategy for vehicle 500. For example, if the radar sensitivity is determined to be greater than loss threshold 518, control system 508 may cause vehicle 500 to slow down and/or perform other precautionary measures. Decreasing the speed of vehicle 500 can help prevent vehicle 500 from driving too fast relative to its sensor coverage of the surrounding environment. In some cases, weather or other environment conditions and/or hardware issues may reduce the max sensing range of radar system 504 and/or sensors 506, which can trigger computing device 502 and/or control system 508 to reduce the speed of vehicle 500 to accommodate the reduced operational capabilities.

Vehicle 500 may engage in wireless communication 524 with remote computing system 520 and vehicle 522. Wireless communication 524 may allow for data exchange or collaborative processing between vehicle 500, remote computing system 520, and vehicle 522. For example, vehicle 500 may provide information and sensor data to remote computing system 520 and/or vehicle 522. Similarly, vehicle 500 may receive information and sensor data from remote computing system 520 or vehicle 522. As an example, remote computing system 520 may aggregate radar data from a large number of vehicles and use the radar data to generate (or update) data model 512 for distribution to vehicles, including vehicle 500 and vehicle 522. This collaborative processing may enhance the accuracy and reliability of radar sensitivity detection and evaluation by leveraging scale in radar, vehicles, and computing resources.

Computing device 502 may receive radar data in real-time as vehicle 500 navigates through its environment. For instance, computing device 502 may continuously receive new radar data that reflects the dynamic nature of the environment, including the movement of vehicle 500 and various objects within the environment. In other cases, the radar data may be received by computing device 502 at predetermined intervals or in response to specific events or conditions. The objects represented in the radar data may include a variety of entities present in the surrounding environment. For example, the objects may include other vehicles (e.g., vehicle 522), pedestrians, animals, buildings, trees, signs and traffic signals and/or any other physical entities that may be detected by radar system 504. The radar data may provide computing device 502 with a detailed representation of the environment around vehicle 500, providing useful information for the perception system and control system 508 to use when controlling vehicle 500.

In some cases, computing device 502 may receive sensor data in a raw or unprocessed form, and may require further processing to extract useful information. For instance, the processing of the radar data may involve various signal processing techniques, such as filtering, amplification, demodulation, or decoding. The processed radar data may then be used for various purposes, such as object detection, object tracking, collision avoidance, or radar sensitivity estimation. Computing device 502 may perform the processing techniques in some cases. In some examples, field programmable gate arrays (FPGA), specialty processors, or other processors may be positioned locally at individual radars and configured to perform the processing techniques (or a portion of the processing techniques to assist computing device 502). Radar system 504 may include one or multiple processors that can perform radar data and perform other operations described herein.

Radar data, including detections or tracks, may be input into machine learning algorithms in vehicle perception systems. These algorithms combine radar information with data from other sensors like cameras, lidar, and ultrasonic sensors to create sensor-fused perception objects. These objects represent high-likelihood entities in the vehicle's environment, containing inferred information, such as object type classification (e.g., a bicycle, a motorcycle, a sedan or smaller car, or a truck), position, velocity, size, dimensions, orientation, and predicted trajectory. In some cases, the machine learning algorithms provide traceability, indicating which specific pieces of radar data contributed to each perception object. For instance, this may be represented as an index into a list of radar detections or tracks. In some cases where the algorithm fails to explicitly provide this information, heuristic methods may be used to re-associate radar data with perception objects. For example, the heuristic methods may include proximity matching, velocity correlation, and range/Doppler extent comparison.

The association between raw radar data and fused perception objects serves useful purposes, including enabling performance evaluation and debugging of the sensor fusion system, allowing for refinement of radar processing algorithms based on higher-level perception results, and facilitating the implementation of radar-specific object tracking or prediction methods. Additionally, this link helps in assessing the contribution of radar data to overall perception accuracy and enables radar-based fallback or redundancy in case of failures in other sensor modalities. By maintaining the connection between raw radar data and fused perception objects, the perception system can leverage the strengths of radar, such as direct velocity measurements and all-weather performance. At the same time, the perception system may use the complementary capabilities of other sensors, resulting in a more robust and accurate understanding of the surrounding environment. This integrated approach enhances the ability of vehicle 500 to navigate complex scenarios and make informed decisions based on a comprehensive perception of its surroundings.

Computing device 502 (or another processor) may filter radar data representing one or more objects based on a set of predetermined criteria. For instance, computing device 502 may apply one or multiple filters to entire radar images generated by radar system 504 or focused on particular aspects of radar images, such as bins of portions of the radar data that correspond to objects identified by computing device 502. The set of predetermined criteria may include one or multiple factors, such as the range of the objects from the vehicle, the azimuth of objects relative to the vehicle, object types, and/or the weather conditions of the environment. For instance, computing device 502 or another processor may filter out objects that are beyond a certain range from vehicle 500. This range-based filtering may help to focus the radar sensitivity estimation on objects that are within a relevant (or selected) distance from vehicle 500, which can improve the accuracy and applicability of the estimation. In some cases, the predetermined criteria may also include a factor that considers the direct line of sight between the radar sensor and each object. Computing device 502 may filter out objects that are not within a certain degree of the direct line of sight of the radar. As such, line-of-sight filtering may be used by computing device 502 to exclude objects that are occluded by other objects or structures, which could otherwise interfere with the radar signals and affect the accuracy of the radar sensitivity estimation.

In some examples, computing device 502 may also perform weather-specific filtering of the radar data. The weather conditions in the environment of the vehicle can impact the performance of radars, including the sensitivity of radar system 504. For example, heavy rain or snow can attenuate the radar signals and reduce the radar sensitivity. Similarly, road spray kicked up by tires of another vehicle or vehicle 500 may degrade radar performance. As such, computing device 502 may adjust the filtering criteria based on the current weather conditions to account for their impact on the radar sensitivity. In some cases, the weather-specific filtering may involve excluding or giving less weight to radar data obtained under adverse weather conditions, or adjusting the expected SNR or RCS values used from data model 512 based on the weather conditions. The weather-specific filtering may enable computing device 502 to accurately estimate radar sensitivity loss under various weather conditions.

To evaluate loss, computing device 502 may perform a comparison between the radar parameters (e.g., SNR data or RCS data) corresponding to the filtered objects and data model 512 representing expected radar parameters (e.g., SNR data and RCS data) aggregated for objects that are the same type as the filtered objects. Data model 512 may be generated based on aggregated SNR and RCS data for a large number of objects of the same type as the filtered objects. Data model 512 can be based on aggregated radar data collected under various conditions and scenarios, enabling expected trends to be developed and used as baselines for comparisons. For instance, a comparison may involve calculating the difference between the actual SNR data, RCS data, and/or other radar parameters determined based on radar data corresponding to vehicle 522 and the expected SNR data, RCS data, or other expected parameters for similarly sized vehicles as vehicle 522 as specified by data model 512. In some cases, the difference may be calculated for each object individually, and the results may be averaged to obtain an overall estimation of the radar sensitivity loss. In other cases, the difference may be calculated for a group of objects collectively, and the result may be used as the estimate of the radar sensitivity loss. In other examples, other suitable comparison methods may be used.

In some cases, the comparison may involve correcting the detected SNR data, RCS data, and/or other radar parameters for an object based on the relative position of the object. The relative position of the object may refer to its position relative to the radar or vehicle 500. The relative position may affect the strength of the radar signals reflected from the object and received by the radar, and hence have an impact on the SNR data and RCS data measured for the object. For example, an object that is directly in front of the radar may reflect stronger radar signals than an object that is located off to the side. Therefore, computing device 502 may adjust the detection of the SNR data, the RCS data, or other radar parameters associated with the object based on its relative position to account for this effect. As such, the correction of the detection radar parameters (e.g., SNR data, RCS data) may involve applying a correction factor that is determined based on the relative position of the object. The correction factor may be derived from a directivity profile of the radar, which describes how the strength of the radar signals varies with the angle of incidence. The directivity profile may be a known characteristic of the radar, or it may be estimated based on empirical data. By applying the correction factor to the detection parameters (e.g., SNR and RCS data), computing device 502 may obtain a corrected SNR or RCS that provides a more accurate representation of the radar sensitivity.

The corrected radar parameters (e.g., SNR data, RCS data) measured from one or more objects in the environment of vehicle 500 may be used by computing device 502 in the comparison with data model 512 to estimate the radar sensitivity loss. The estimated radar sensitivity loss may represent a measure of the overall degradation of radar system 504 in some cases. In other cases, the estimated radar sensitivity loss may represent an individual radar's ability to detect objects in its environment. Estimated radar losses experienced by radar system 504 and/or individual radars may be used by vehicle systems in real-time to identify cases where one or multiple radars experience sensitivity degradation quickly in a scene. Vehicle systems may also use estimated losses to monitor the sensitivity of one or multiple radars over time to identify potential hardware faults or when the condition of a radome is causing reduced sensitivity. In some cases, mud, insect splatter, or other debris may cover portions of a radar's radome and impact the transmission and reception of radar signals by that radar until the radome is cleaned or replaced.

In some aspects, the estimated radar sensitivity loss may be compared to a threshold value to determine whether the radar's sensitivity has degraded significantly. If the estimated radar sensitivity loss exceeds the threshold value, computing device 502 may generate an alert or take corrective action, such as adjusting the operation of the radar or initiating a diagnostic procedure to identify potential hardware faults. In some cases, the threshold value may be set based on the specifications of the radar, the requirements of vehicle 500, or the conditions of the environment. The threshold value may be adjustable to accommodate changes in the operating conditions or performance requirements of the radar.

In some aspects, the estimated radar sensitivity loss may be used by computing device 502 or another processor to adjust the operation of one or multiple radars and/or operations of vehicle 500. For example, if the estimated radar sensitivity loss indicates that the radar's ability to detect objects at a certain range has degraded, computing device 502 may adjust the radar's operating parameters, such as its power output or gain settings, to improve its detection performance at that range. Alternatively, computing device 502 may adjust control strategy for vehicle 500, such as its speed or route, to mitigate the impact of the degraded radar sensitivity on the safety and efficiency of vehicle 500.

In some cases, data model 512 used for comparison with the SNR or RCS data of the filtered objects may be generated based on aggregated SNR and RCS data for a large number of objects of the same type as the filtered objects. The aggregated data may be collected under various conditions and scenarios, and may be processed to derive expected SNR or RCS values for the objects. The aggregation of the data may involve combining the SNR and RCS data for the objects as a function of range, which may create a comprehensive data model that reflects the expected radar performance over a range of distances. The aggregated data may be collected from non-occluded position-corrected detections for specific perception object types. The position correction may involve adjusting the detection data based on the relative position of the perception object to the radar sensor or the vehicle obtaining the radar measurements. This position correction may help to account for variations in the strength of the radar signals due to the relative position of the object, thereby improving the accuracy of the aggregated data and the resulting data model.

In some aspects, the aggregated data may be collected for specific perception object types, such as cars or trucks. The selection of specific perception object types may help to ensure that the aggregated data and the resulting data model are representative of the typical objects that the radars are expected to detect in its environment. This may help to improve the relevance and accuracy of sensitivity estimation for radars. In some cases, the aggregated data may be collected over many runs or operational cycles of a radar, thereby providing a large and diverse dataset for generating data model 512. The large dataset may help to capture the variations in the radar performance under different conditions and scenarios, which enhances the robustness and reliability of data model 512.

In some aspects, the estimated radar sensitivity loss may be applied in real-time by computing device 502 as a loss estimator. This real-time sensitivity monitoring may provide timely feedback on the performance of the radar, enabling quick adjustments or corrective actions to be taken by computing device 502 if necessary. In some cases, the real-time sensitivity monitoring may involve calculating a range-based loss for each detected object. The range-based loss may be determined by subtracting the detection SNR or RCS from the corresponding values in data model 512. If the range-based loss exceeds a certain threshold, computing device 502 may conclude that the sensitivity of the radar has degraded significantly. The threshold may be set based on the specifications of the radar, the requirements of the navigation system of vehicle 5002, and/or the conditions of the environment.

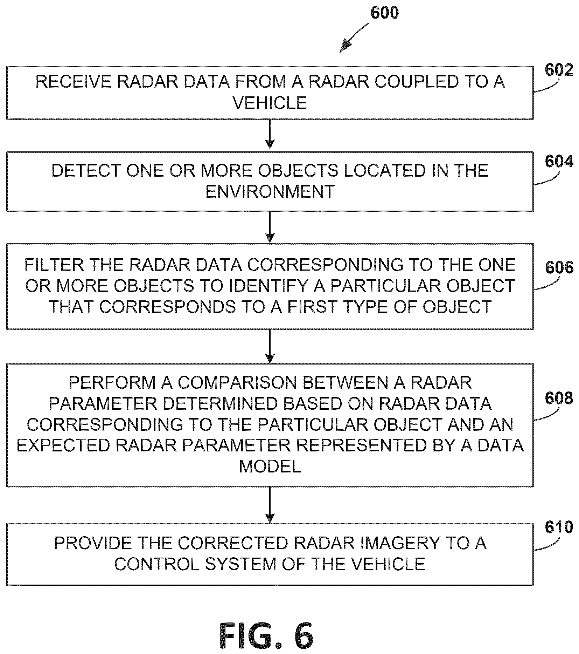

Figure 6 is a flow chart of method 600 for estimating radar sensitivity. Method 600 may include one or more operations, functions, or actions as illustrated by one or more of blocks 602, 604, 606, 608, and 610. Although the blocks are illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for method 600 and other processes and methods disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. The program code may be stored on any type of computer readable medium or memory, for example, such as a storage device including a disk or hard drive. Various types of computing systems can be used to perform method 1100 and other methods described herein.

In some examples, the computing system performing disclosed techniques may include one or multiple processors, which may be part of the same or different computing devices. The computing system may be located onboard the vehicle and may communicate with one or more remotely positioned computing devices. In some examples, a specialized type of processor may perform method 600. For instance, one or more application-specific integrated circuits (ASICs) and/or field programmable gate arrays (FPGAs) may perform method 600. As an example, an ASIC or FPGA may perform one or more blocks of method 600. In some cases, a computing system may perform method 600 for different radars to compare the relative performance of the radars. Method 600 may be performed to evaluate the performance of other types of sensors as well.

At block 602, method 600 involves receiving radar data from a radar coupled to a vehicle. The radar data represents an environment external to the vehicle. A computing system may receive radar data from one or multiple radars in various ways. For instance, the computing system may be connected to the radars through an internal communication network of the vehicle, such as a Controller Area Network (CAN) bus or Ethernet network. This allows for real-time transmission of radar data from multiple sensors to the central computing system. In some cases, the radar sensors may transmit data wirelessly to the computing system using protocols such as Wi-Fi, Bluetooth, or dedicated short-range communication (DSRC).

The computing system may receive raw radar data directly from the sensors, which may include information such as signal strength, phase, and time-of-flight for each detected object. This raw data may then be processed by the computing system to extract relevant information. Alternatively, the radars may perform some initial processing and send pre-processed data to the computing system. This data may include object detection lists, with information such as range, velocity, and angle for each detected object. The computing system may receive radar data at regular intervals, such as every 20 milliseconds, to maintain an up-to-date representation of the vehicle's surrounding environment. The data transmission rate may be adjustable based on the vehicle's speed or the complexity of the environment. In some examples, the computing system may actively request data from the radars when needed, rather than receiving continuous streams of data. This approach may be used to conserve bandwidth or processing power.

In some cases, the computing system may use data fusion techniques to combine information from multiple radars to create a comprehensive view of the vehicle's surroundings. This may involve aligning data from different sensors based on their positions and orientations on the vehicle. To handle large volumes of data from multiple high-resolution radars, the computing system may use high-speed data buses or dedicated hardware accelerators for efficient data transfer and processing. The computing system may also receive metadata along with the radar data, such as timestamps, sensor health status, and calibration information. This additional information can be used to accurately interpret and use the radar data.

In some examples, the computing system may dynamically adjust the data reception parameters based on the current needs of the vehicle. For example, the computing system may request more frequent updates from certain radars when navigating complex environments or performing specific maneuvers.

In some examples, the radar may utilize advanced signal processing techniques to generate 2D images from the received radar returns. For instance, radar images may represent a view of the environment, with range on one axis and azimuth angle (or Doppler) on the other. In some cases, the radar may use multiple receiver antennas or a phased array to enable 2D imaging capabilities. By processing the phase differences between signals received at different antennas, the system can create a 2D image of the surrounding environment. For 3D imaging, the radar may use techniques like multiple-input multiple-output (MIMO) configurations or frequency-modulated continuous-wave (FMCW) waveforms to generate voxel data. Voxels represent 3D volumetric pixels, providing information about range, azimuth, and elevation. The radar system may incorporate digital beamforming techniques to create high-resolution 2D images or 3D voxel maps. This approach allows for flexible and adaptive beam steering, enabling the creation of detailed spatial representations of the environment.

In some implementations, the radar may combine data from multiple sweeps or scans to build up 2D images or 3D voxel representations over time. This can help improve resolution and reduce noise in the resulting images. The radar may use machine learning algorithms to process raw radar data and generate 2D images or voxel representations. These algorithms can help extract meaningful features and patterns from the radar returns, enhancing the quality of the resulting images. In some cases, the computing system may fuse data from multiple radar and/or other sensor types (like lidar or cameras) to create more comprehensive 2D images or voxel maps of the environment. This sensor fusion approach can help overcome limitations of individual sensors and provide a more complete picture of the surroundings. Vehicle systems may use specialized hardware accelerators or graphics processing units (GPUs) to efficiently process the large amounts of data required for generating 2D images or voxel representations in real-time. By receiving and processing radar data in these ways to generate 2D images or voxels, the system can provide spatial information about the vehicle's environment, enabling more advanced object detection, tracking, and scene understanding capabilities.

At block 604, method 600 involves detecting, based on the radar data, one or more objects located in the environment. The computing system may receive raw radar data from one or more radar sensors mounted on the vehicle. This data typically consists of reflected radar signals from objects in the environment. In some cases, the system may preprocess the raw radar data to reduce noise and improve signal quality. This may involve techniques such as filtering, amplification, or signal averaging.

The computing system may then apply signal processing algorithms to the preprocessed radar data to extract relevant features. These features may include range, velocity, angle, and radar cross-section of potential objects. The system may use detection algorithms to identify clusters or patterns in the processed radar data that likely correspond to physical objects. These algorithms may use techniques such as constant false alarm rate (CFAR) detection or an adaptive threshold process. In some examples, the computing system may apply tracking algorithms to associate detections across multiple radar scans, allowing for the tracking of objects over time and estimation of their trajectories.

At block 606, method 600 involves filtering the radar data corresponding to the one or more objects to identify a particular object that corresponds to a first type of object. The computing system may perform the filtering process based on a set of predetermined criteria. In some examples, the set of predetermined criteria includes a first predetermined criteria that conveys a range filter for distinguishing the one or more objects from additional objects in the environment based on a range associated with each object and a second predetermined criteria that selects the one or more objects based on each object in the one or more objects having a direct line of sight relative to the radar.

In some examples, the computing system may apply object identification and/or classification algorithms to the processed radar data. These algorithms may analyze features such as size, shape, velocity, and RCS to distinguish based on object type. For instance, the computing system may distinguish passenger vehicles from other object types. In some cases, the computing system may use machine learning models, such as neural networks, trained on large datasets of radar signatures from various object types. These models may be capable of recognizing the characteristic radar returns associated with passenger vehicles. In addition, the computing system may use tracking algorithms to observe object behavior over time. For example, passenger vehicles typically exhibit specific motion patterns and velocities that can help distinguish them from static objects or other road users like pedestrians or cyclists.

In some examples, the computing system may apply feature extraction techniques to the radar data to identify key characteristics of objects (e.g., passenger vehicles), such as their typical length, width, and height ranges. These features may be compared against predefined templates or models for the object type. The computing system may utilize Doppler information from the radar data to analyze the velocity profile of detected objects. For instance, the computing system may leverage that passenger vehicles often have distinct velocity characteristics that can be used to help differentiate them from other object types.

In some implementations, the computing system may combine radar data with information from other sensors, such as cameras or lidar, to improve object classification accuracy. This sensor fusion approach may help confirm the identification of passenger vehicles by cross-referencing radar detections with visual or point cloud data. The computing system may apply contextual analysis, considering factors such as the object's location on the road, its movement relative to lane markings, and its interactions with other objects. This contextual information can help refine the classification of objects as passenger vehicles. In some examples, the radar system may use micro-Doppler analysis to detect characteristic features of passenger vehicles or other desired objects, such as the rotation of wheels or the movement of windshield wipers, which can provide additional cues for identification. The computing system may use probabilistic methods to assign confidence scores to object classifications. Objects with high confidence scores of being passenger vehicles may be treated differently in subsequent processing or decision-making steps.

The computing system may filter the radar data corresponding to the one or more objects based on a set of predetermined criteria in various ways. For instance, the computing system may apply a range threshold to exclude objects beyond a certain distance from the vehicle. A range filter may help focus on objects within a relevant operational range and reduce computational load. In some cases, the range threshold may be adjustable based on factors like vehicle speed or environmental conditions.

The computing system may use sensor data or environmental models to determine if there is an unobstructed path between the radar and detected objects. Objects that are occluded by other vehicles, buildings, or terrain features may be filtered out to improve the accuracy of the sensitivity loss estimation. In addition, the computing system may adjust filtering parameters based on current weather conditions. For instance, during heavy rain or snow, the filter may account for increased signal attenuation and potential false detections. The weather filter may also consider how different weather conditions affect various object types differently.

The computing system may also filter out objects based on their relative velocity. For instance, the predefined criteria may include a velocity-based criteria that can help exclude stationary objects or those moving at speeds inconsistent with typical road users, focusing the analysis on relevant dynamic objects. In some cases, the computing system may use the velocity filter to identify stationary objects (e.g., parked vehicles) for use to estimate radar sensitivity and performance.

In some examples, the predefined criteria may filter objects with very weak return signals to reduce noise and focus on more reliable detections. The threshold for this filter may be dynamically adjusted based on the estimated radar sensitivity. The computing system may also apply different filtering criteria based on the type of object detected. For example, the computing system may use different range thresholds for large vehicles versus pedestrians. In some cases, objects detected at extreme angles relative to the radar's main beam may be filtered out, as these detections are often less reliable and more susceptible to distortions. The computing system may also filter out objects that do not show consistent detection over multiple radar sweeps, helping to eliminate transient false detections. In some examples, the computing system may exclude objects not consistently detected by multiple sensors, improving overall detection reliability.

At block 608, method 600 involves performing a comparison between a radar parameter determined based on radar data corresponding to the particular object and an expected radar parameter represented by a data model. In some examples, the data model is generated based on radar data aggregated for objects that match the first type of object.

The data model may convey multiple radar parameters as a function of range with the radar parameters being based on the radar data aggregated for the objects that match the first type of object. The computing system may receive the data model from a remote computing device via wireless communication.

In some examples, the computing system may determine SNR data based on the filtered radar data corresponding to the one or more objects and perform the comparison between the SNR data and expected SNR data represented by the data model. The expected SNR data is based on SNR data aggregated for the objects that match the first type of object. In some examples, the computing system may determine radar cross section (RCS) data based on the filtered radar data corresponding to the one or more objects. The computing system may then perform the comparison between the RCS data and expected RCS data represented by the data model. The expected RCS data is based on RCS data aggregated for the objects that match the first type of object.

In some examples, the computing system may compare radar parameters determined based on the filtered radar data corresponding to the one or more objects and expected radar parameters represented by a data model in different ways. For instance, the computing system may calculate the difference between the observed SNR or RCS values from the filtered radar data and the expected values from the data model for objects of similar type and range. In some cases, the computing system may normalize the observed and expected parameters to account for variations in radar configurations or environmental conditions before performing the comparison. The computing system may use statistical methods to compare the distribution of observed radar parameters to the expected distribution from the data model. This may involve calculating metrics like mean squared error or Kullback-Leibler divergence.

In some examples, for multiple objects, the computing system may perform a point-by-point comparison of radar parameters and aggregate the results to obtain an overall measure of deviation from the expected values. In addition, the computing system may apply weighting factors to different radar parameters based on their relative importance or reliability, which allows for a more nuanced comparison between observed and expected values. In some implementations, the computing system may use machine learning techniques, such as anomaly detection algorithms, to identify significant deviations between the observed radar parameters and those predicted by the data model.

In some examples, the computing system may perform time-series analysis to compare how observed radar parameters change over time relative to the expected trends represented in the data model. In addition, for radar systems with multiple channels or frequencies, the computing system may compare parameters across different channels to identify any frequency-dependent deviations from expected values.

In some cases, the computing system may use probabilistic methods to estimate the likelihood that the observed radar parameters match the expected distribution from the data model, providing a confidence measure for the comparison. By using one or multiple comparison techniques, the computing system can effectively quantify the differences between observed and expected radar parameters, enabling accurate estimation of radar sensitivity loss and identification of potential sensor degradation or faults.

At block 610, method 600 involves estimating radar sensitivity loss for the radar based on the comparison. In some examples, the computing system may compare the estimated radar sensitivity loss to a threshold loss and adjust operation of the radar based on the estimated radar sensitivity loss exceeding the threshold loss. For instance, the computing system may adjust a power level used by the radar during signal transmission. In some cases, the computing system may adjust one or more of a power level, a waveform, a timeline used by the radar during signal transmission. The timeline may alter the transmission pattern or timing used by the radar.

The computing system can estimate radar sensitivity and other performance parameters based on the comparison (or multiple comparisons) in various ways. For instance, the computing system may calculate a sensitivity loss factor by determining the average difference between observed and expected signal-to-noise ratio (SNR) values across multiple detected objects. This factor can provide a direct estimate of overall radar sensitivity degradation. In some cases, the computing system may use regression analysis to model the relationship between observed and expected radar parameters. The slope of the regression line can indicate sensitivity changes, with values less than 1 suggesting sensitivity loss. In addition, the computing system may estimate detection range performance by comparing the maximum range at which objects are reliably detected to the expected detection range from the data model. A reduction in actual detection range may indicate sensitivity loss. Further, by analyzing discrepancies in RCS measurements across different object types and ranges, the computing system can estimate changes in the dynamic range and gain characteristics of radars.

In some cases, the computing system may use statistical methods to estimate false alarm rates by comparing the number of detections that do not correspond to real objects against the expected false alarm rate from the data model. In addition, in some implementations, the computing system may use machine learning algorithms to predict radar performance parameters based on the observed deviations from expected values. These algorithms can learn complex relationships between various radar parameters and overall system performance. The computing system may also estimate angular resolution by comparing the observed angular separation of closely spaced objects to the expected resolution capabilities represented in the data model. By analyzing Doppler measurements of objects with known velocities, the computing system can estimate velocity measurement accuracy and any degradation in the radar's velocity resolution. The computing system may also use information theory concepts, such as mutual information, to quantify how much information about the environment is being captured by the radar compared to what is expected based on the data model.

In some cases, the computing system may perform sensitivity analysis to determine which radar parameters are most affected by the observed deviations, helping to identify specific aspects of radar performance that may be degrading. By applying these estimation techniques, the computing system can provide comprehensive insights into radar sensitivity and other performance parameters, which may enable effective monitoring and maintenance of the vehicle radar system.

In some examples, the computing system may perform corrective actions, alerts, and other responses based on the estimated sensitivity and other performance parameters. For instance, the computing system may generate visual or audible alerts to notify the driver or vehicle occupants of reduced radar performance, potentially recommending increased caution or manual driving intervention. In some cases, the computing system may adjust the radar's operating parameters, such as increasing transmit power or modifying the waveform characteristics, to compensate for detected sensitivity loss.

In some examples, adjusting the operation of the radar in response to detected sensitivity loss may involve several strategies. The system may modify the radar aperture, for instance, by increasing the number of active transmit elements to enhance radar directivity. Radar waveform adjustments could include changing the range swath to focus more on close-in ranges when sensitivity is compromised. The radar timeline might be altered, such as increasing the waveform duration to improve signal-to-noise ratio (SNR). Additionally, the system may adjust where the radar illuminates by modifying transmit beam pointing to increase on-road duty factor. These adaptive techniques allow the radar system to optimize its performance in response to changing conditions or degraded sensitivity, maintaining effective object detection and tracking capabilities.

The computing system may initiate self-cleaning procedures for the radar sensor, such as activating wipers, puffers, heaters, or washing systems, if the sensitivity loss is suspected to be due to environmental contamination. In some cases, the computing system may redistribute sensing tasks to prioritize data from better-performing sensors and reduce reliance on degraded units. In addition, the computing system may adjust sensor fusion algorithms to place more weight on data from other sensor types, such as cameras or lidar, when radar performance is compromised. The computing system may also modify the behavior of the vehicle, such as reducing speed or increasing following distance, to account for reduced radar performance. The computing system may log detailed performance data and trigger over-the-air updates to refine the radar's signal processing algorithms or update its calibration parameters. For severe performance degradation, the computing system may initiate a safe stop procedure or handover control to a human driver, ensuring vehicle safety. In some cases, the computing system may schedule maintenance alerts, notifying the vehicle owner or fleet operator of the need for radar sensor inspection or replacement. The computing system may also share information about localized radar performance issues with other nearby vehicles or infrastructure, which can potentially enhance overall traffic safety. By implementing one or more responses, the computing system may effectively manage radar performance issues, ensuring continued safe operation of the vehicle and timely maintenance of the sensor systems.

In some examples the computing system may compare the estimated radar sensitivity loss to a threshold loss and adjust a control strategy for the vehicle based on the estimated radar sensitivity loss exceeding the threshold loss. For instance, the computing system may decrease the speed of the vehicle and increase the following distance used by the vehicle when another vehicle is traveling in front of the vehicle.

In some examples the computing system may compare the estimated radar sensitivity loss to a threshold loss and trigger a cleaning operation at a radome corresponding to the radar based on the estimated radar sensitivity loss exceeding the threshold loss. In some cases, the computing system may classify the particular object further based on image data and lidar data corresponding to the one or more objects and use the classification for various actions.

In some examples, method 600 may further involve receiving second radar data representing the environment from a second radar coupled to the vehicle. Method 600 may also involve performing a second comparison between a second radar parameter determined based on the second radar data corresponding to the particular object and the expected radar parameter represented by the data model and estimating a second radar sensitivity loss for the second radar based on the comparison. The computing system may then perform a third comparison between the estimated radar sensitivity loss for the radar and the estimated second radar sensitivity loss for the second radar and adjust operation of either the radar or the second radar based on the third comparison.

In some cases, method 600 may be performed by vehicles operating in complex urban environments, where vehicle radar may be used to detect a wide variety of objects, such as other vehicles, pedestrians, cyclists, or infrastructure elements. The filtering of radar data based on predetermined criteria, such as range and weather conditions, may help to focus the radar sensitivity estimation on the most relevant objects in these environments. In other cases, the method may be used in vehicles operating on highways or in rural areas, where radar may be used to detect other vehicles at various distances. The development of the data model of expected SNR and RCS profiles based on various parameters, such as radar mount position, waveform parameters, range, and gain settings, may be particularly useful in these scenarios, as it can provide a reference for expected radar performance under various conditions.

In some aspects, method 600 may be performed by vehicles operating in adverse weather conditions, such as rain, snow, or fog. Weather-specific filtering of perception objects can allow for more accurate estimation of radar sensitivity loss under these conditions. A vehicle system may adjust the filtering criteria based on the current weather conditions to account for their impact on the radar sensitivity.

In addition, method 600 may be used in vehicles equipped with multiple radar sensors, each with different mount positions, waveform parameters, range settings, and gain settings. The system may estimate the radar sensitivity loss for each radar sensor individually, allowing for a comprehensive monitoring of the overall radar performance of the vehicle. In some cases, the method may be used in conjunction with other sensor technologies (non-radar sensors), such as lidar or camera sensors, to provide a multi-modal perception of the vehicle's environment. The estimated radar sensitivity loss may be used to adjust the reliance on the radar data in the multi-modal perception, thereby improving the robustness and reliability of the perception system.

In some examples, method 600 may be used in vehicles equipped with advanced radar technologies, such as phased-array radars or frequency-modulated continuous-wave (FMCW) radars. Method 600 may be adapted to the specific characteristics of these radar technologies, such as their unique waveform parameters or directivity profiles, to provide accurate and relevant estimates of radar sensitivity loss.

In some examples, individual vehicles that are part of a fleet may continuously monitor their radar performance, including range-dependent losses. In some cases, these losses are indicative of various weather conditions, such as rain, snow, fog, or other atmospheric phenomena that affect radar propagation. As such, by comparing the observed losses to pre-established model tables, each vehicle can infer the current weather conditions in its immediate environment. This information may be shared with a central fleet management system, effectively creating a distributed network of weather sensors across the entire operational area of the fleet. For example, the central system may aggregate and analyze the data from all vehicles to create and maintain a real-time map of weather conditions and their impact on radar performance. The map can be much more detailed and up-to-date than traditional weather forecasting methods, especially for localized weather phenomena.

Based on the aggregated data, the fleet management system can implement various policies and actions to optimize vehicle operations and enhance safety. In some examples, these actions may include rerouting vehicles to avoid areas with severe weather conditions, dynamically adjusting fleet-wide speed limits, switching vehicles to alternative sensor modes, and/or increasing reliance on other sensor types in areas where radar performance is significantly degraded. In some cases, the system can make decisions to stop navigation of some vehicles or restrict operations in specific areas where weather conditions make safe operation impossible. The system can also use the data for longer-term operational improvements. For instance, patterns of radar degradation can be used to schedule preventive maintenance or cleaning of radar sensors. Historical data on weather-related radar performance can inform route planning, vehicle deployment strategies, and even future vehicle design considerations. In manually operated vehicles, the system can provide alerts and recommendations to drivers based on the observed weather conditions and their impact on sensor performance. In general, this approach creates a feedback loop where individual vehicle experiences contribute to fleet-wide operations, which in turn help optimize the performance and safety of each vehicle. By leveraging the collective awareness of weather conditions and their impact on radar performance, the fleet can operate more efficiently and safely across a wide range of environmental conditions. This system demonstrates how shared data and adaptive policies can significantly enhance the capabilities of a vehicle fleet in dealing with challenging weather conditions.

In some examples, radars are used with control electronics, which can include one or more field-programmable gate arrays (FPGAs), ASICs, CPUs, GPUs, and/or TPUs. For instance, a radar unit can generate and receive complex signals that require significant processing. One or more control electronics can be programmed to implement various signal processing algorithms, such as filtering, modulation/demodulation, noise reduction, and digital beamforming. These operations help extract relevant information from the received radar signals, enhance signal quality, and improve target detection and tracking. In addition, radar systems often involve the conversion of analog signals to digital format for further processing. The control electronics can include analog-to-digital converters (ADCs) and digital-to-analog converters (DACs) to facilitate these conversions. The control electronics can receive analog signals from radar sensors, digitize them, and process the digital data for analysis and interpretation.

In addition, the control electronics can also provide the capability for real-time control and coordination of various radar system components. For instance, the control electronics can handle synchronization, timing generation, and system control, ensuring the proper timing and sequencing of operations within the radar system. This real-time control is crucial for accurate and synchronized signal transmission and reception. The control electronics can efficiently handle large amounts of data generated by the radar system. The control electronics can implement data storage, buffering, and data flow management techniques, enabling efficient data handling during signal transmission. This includes tasks such as data compression, data packetization, and data routing, ensuring smooth and reliable data transmission within the radar system. The control electronics can also integrate various interfaces and protocols required for radar signal transmission, such as processors, memory modules, communication modules, and display units. The control electronics can provide the necessary interface logic to facilitate seamless data exchange between these components, enabling efficient data flow and system integration. The control electronics can also be reconfigured and customized to meet specific radar system requirements and adapt to changing operational needs. This allows radar system designers to implement and optimize algorithms and functionalities specific to their application, resulting in enhanced performance and efficiency.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, operation, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step, block, or operation that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer-readable medium such as a storage device including RAM, a disk drive, a solid state drive, or another storage medium.

Moreover, a step, block, or operation that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

For the illustrative purposes only, this specification includes the following example feature combinations:
Combination 1. A method comprising:
   receiving, at a computing system, radar data from a radar coupled to a vehicle, wherein the radar data represents an environment external to the vehicle;
   detecting, based on the radar data, one or more objects located in the environment;
   filtering, based on a set of predetermined criteria, the radar data corresponding to the one or more objects to identify a particular object that corresponds to a first type of object;
   performing a comparison between a radar parameter determined based on radar data corresponding to the particular object and an expected radar parameter represented by a data model, wherein the data model is generated based on radar data aggregated for a plurality of objects that match the first type of object; and
   estimating radar sensitivity loss for the radar based on the comparison.
Combination 2. The method of combination 1, further comprising:
   determining signal-to-noise ratio (SNR) data based on the radar data corresponding to the particular object; and
   wherein performing the comparison comprises: performing the comparison between the SNR data and expected SNR data represented by the data model, wherein the expected SNR data is based on SNR data aggregated for the plurality of objects that match the first type of object. Combination 3. The method of combination 1 or combination 2, further comprising:
   determining radar cross section (RCS) data based on the radar data corresponding to the particular object; and
   wherein performing the comparison comprises: performing the comparison between the RCS data and expected RCS data represented by the data model, wherein the expected RCS data is based on RCS data aggregated for the plurality of objects that match the first type of object. Combination 4. The method of any preceding combination, wherein the set of predetermined criteria comprises:
   a first predetermined criteria that conveys a range filter for distinguishing the particular object from the one or more objects in the environment based on a range associated with each object; and
   a second predetermined criteria that identifies the particular object based on the particular object having a certain degree of line of sight relative to the radar.
Combination 5. The method of combination 4, wherein the set of predetermined criteria further comprises:
   a third predetermined criteria that filters the radar data based on multiple detections within the radar data.
Combination 6. The method of any preceding combination, wherein the data model conveys a plurality of radar parameters as a function of range, wherein the plurality of radar parameters are based on the radar data aggregated for the plurality of objects that match the first type of object.
Combination 7. The method of any preceding combination, further comprising:
   comparing the estimated radar sensitivity loss to a threshold loss; and
   based on the estimated radar sensitivity loss exceeding the threshold loss, adjusting operation of the radar, wherein adjusting operation of the radar comprises: adjusting one or more of a power level, a waveform, a timeline used by the radar during signal transmission.
Combination 8. The method of any preceding combination, further comprising: classifying the particular object further based on image data and lidar data corresponding to the one or more objects.
Combination 9. The method of any preceding combination, further comprising:
   comparing the estimated radar sensitivity loss to a threshold loss; and
   based on the estimated radar sensitivity loss exceeding the threshold loss, adjusting a control strategy for the vehicle.
Combination 10. The method of combination 9, wherein adjusting the control strategy for the vehicle comprises: decreasing a speed of the vehicle and increasing a following distance used by the vehicle when another vehicle is traveling in front of the vehicle.
Combination 11. The method of any preceding combination, further comprising:
   comparing the estimated radar sensitivity loss to a threshold loss; and
   based on the estimated radar sensitivity loss exceeding the threshold loss, triggering a cleaning operation at a radome corresponding to the radar.
Combination 12. The method of any preceding combination, further comprising: receiving second radar data representing the environment from a second radar coupled to the vehicle;
   performing a second comparison between a second radar parameter determined based on a portion of the second radar data corresponding to a particular object and the expected radar parameter represented by the data model; and
   estimating a second radar sensitivity loss for the second radar based on the comparison.
Combination 13. The method of combination 12, further comprising:
   receiving information modifying at least a route or a control strategy used by the vehicle from a remote computing system, wherein the remote computing system is configured to aggregate radar sensitivity loss information from a plurality of vehicles and distribute modifications to the plurality of vehicles based on the aggregated radar sensitivity loss information.
Combination 14. The method of any preceding combination, further comprising: receiving the data model from a remote computing device via wireless communication, wherein the remote computing device is configured to generate the data model based on the radar data aggregated for the plurality of objects.
Combination 15. A system comprising:
   a vehicle having a radar; and
   a computing device configured to:
      receive radar data which represents an environment external to the vehicle;
      detect, based on the radar data, one or more objects located in the environment that correspond to a first type of object;
      filter, based on a set of predetermined criteria, the radar data corresponding to the one or more objects to identify a particular object that corresponds to a first type of object;
      perform a comparison between a radar parameter determined based on radar data corresponding to the particular object and an expected radar parameter represented by a data model, wherein the data model is generated based on radar data aggregated for a plurality of objects that match the first type of object; and
      estimate radar sensitivity loss for the radar based on the comparison.
Combination 16. The system of combination 15, wherein the computing device is coupled to the vehicle, and wherein the first type of object is a passenger vehicle.
Combination 17. The system of combination 15 or combination 16, wherein the radar is a first radar coupled to the vehicle and a second radar is coupled to the vehicle, and wherein the computing device is further configured to:
   compare the estimated sensitivity loss for the first radar to a second estimated sensitivity loss for the second radar; and
   determine operation of the first radar or the second radar is degraded based on comparing the estimated sensitivity loss for the first radar to the second estimated sensitivity loss for the second radar.
Combination 18. The system of any one of combinations 15 to 17, wherein the computing device is further configured to: classify the particular object via heuristics that use the radar data corresponding to the particular object.
Combination 19. The system of any one of combinations 15 to 18, wherein the computing device is further configured to:
   receive sensor data from one or more non-radar sensors coupled to the vehicle; and
   identify the particular object based on the sensor data received from one or more non-radar sensors.
Combination 20. A non-transitory computer-readable medium configured to store instructions, that when executed by a computing system comprising one or more processors, causes the computing system to perform operations comprising:
   receiving radar data from a radar coupled to a vehicle, wherein the radar data represents an environment external to the vehicle;
   detecting, based on the radar data, one or more objects located in the environment;
   filtering, based on a set of predetermined criteria, the radar data corresponding to the one or more objects to identify a particular object that corresponds to a first type of object;
   performing a comparison between a radar parameter determined based on radar data corresponding to the particular object and an expected radar parameter represented by a data model, wherein the data model is generated based on radar data aggregated for a plurality of objects that match the first type of object; and
   estimating radar sensitivity loss for the radar based on the comparison.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method comprising:
receiving, at a computing system, radar data from a radar coupled to a vehicle, wherein the radar data represents an environment external to the vehicle;
detecting, based on the radar data, one or more objects located in the environment;
filtering, based on a set of predetermined criteria, the radar data corresponding to the one or more objects to identify a particular object that corresponds to a first type of object;
performing a comparison between a radar parameter determined based on radar data corresponding to the particular object and an expected radar parameter represented by a data model, wherein the data model is generated based on radar data aggregated for a plurality of objects that match the first type of object; and
estimating radar sensitivity loss for the radar based on the comparison.

2. The method of claim 1, further comprising:
determining signal-to-noise ratio, SNR, data based on the radar data corresponding to the particular object; and
wherein performing the comparison comprises:
performing the comparison between the SNR data and expected SNR data represented by the data model, wherein the expected SNR data is based on SNR data aggregated for the plurality of objects that match the first type of object.

3. The method of claim 1 or claim 2, further comprising:
determining radar cross section, RCS, data based on the radar data corresponding to the particular object; and
wherein performing the comparison comprises:
performing the comparison between the RCS data and expected RCS data represented by the data model, wherein the expected RCS data is based on RCS data aggregated for the plurality of objects that match the first type of object.

4. The method of any preceding claim, wherein the set of predetermined criteria comprises:
a first predetermined criteria that conveys a range filter for distinguishing the particular object from the one or more objects in the environment based on a range associated with each object; and
a second predetermined criteria that identifies the particular object based on the particular object having a certain degree of line of sight relative to the radar, optionally wherein the set of predetermined criteria further comprises a third predetermined criteria that filters the radar data based on multiple detections within the radar data.

5. The method of any preceding claim, wherein the data model conveys a plurality of radar parameters as a function of range, wherein the plurality of radar parameters are based on the radar data aggregated for the plurality of objects that match the first type of object.

6. The method of any preceding claim, further comprising:
comparing the estimated radar sensitivity loss to a threshold loss; and
based on the estimated radar sensitivity loss exceeding the threshold loss, adjusting operation of the radar, wherein adjusting operation of the radar comprises:
adjusting one or more of a power level, a waveform, a timeline used by the radar during signal transmission.

7. The method of any preceding claim, further comprising:
classifying the particular object further based on image data and lidar data corresponding to the one or more objects.

8. The method of any preceding claim, further comprising:
comparing the estimated radar sensitivity loss to a threshold loss; and
based on the estimated radar sensitivity loss exceeding the threshold loss:
a) adjusting a control strategy for the vehicle, optionally wherein adjusting the control strategy for the vehicle comprises decreasing a speed of the vehicle and increasing a following distance used by the vehicle when another vehicle is traveling in front of the vehicle; and/or
b) triggering a cleaning operation at a radome corresponding to the radar.

9. The method of any preceding claim, further comprising:
receiving second radar data representing the environment from a second radar coupled to the vehicle;
performing a second comparison between a second radar parameter determined based on a portion of the second radar data corresponding to a particular object and the expected radar parameter represented by the data model; and
estimating a second radar sensitivity loss for the second radar based on the comparison, optionally wherein the method further comprises:
receiving information modifying at least a route or a control strategy used by the vehicle from a remote computing system, wherein the remote computing system is configured to aggregate radar sensitivity loss information from a plurality of vehicles and distribute modifications to the plurality of vehicles based on the aggregated radar sensitivity loss information.

10. The method of any preceding claim, further comprising:
receiving the data model from a remote computing device via wireless communication, wherein the remote computing device is configured to generate the data model based on the radar data aggregated for the plurality of objects.

11. A system comprising:
a vehicle having a radar; and
a computing device configured to:
receive radar data which represents an environment external to the vehicle;
detect, based on the radar data, one or more objects located in the environment that correspond to a first type of object;
filter, based on a set of predetermined criteria, the radar data corresponding to the one or more objects to identify a particular object that corresponds to a first type of object;
perform a comparison between a radar parameter determined based on radar data corresponding to the particular object and an expected radar parameter represented by a data model, wherein the data model is generated based on radar data aggregated for a plurality of objects that match the first type of object; and
estimate radar sensitivity loss for the radar based on the comparison.

12. The system of claim 11, wherein the computing device is coupled to the vehicle, and wherein the first type of object is a passenger vehicle.

13. The system of claim 11 or 12, wherein the radar is a first radar coupled to the vehicle and a second radar is coupled to the vehicle, and
wherein the computing device is further configured to:
compare the estimated sensitivity loss for the first radar to a second estimated sensitivity loss for the second radar; and
determine operation of the first radar or the second radar is degraded based on comparing the estimated sensitivity loss for the first radar to the second estimated sensitivity loss for the second radar.

14. The system of any one of claims 11 to 13, wherein the computing device is further configured to:
a) classify the particular object via heuristics that use the radar data corresponding to the particular object; and/or
b) receive sensor data from one or more non-radar sensors coupled to the vehicle, and identify the particular object based on the sensor data received from one or more non-radar sensors.

15. A non-transitory computer-readable medium configured to store instructions, that when executed by a computing system comprising one or more processors, causes the computing system to perform the method of any one of claims 1 to 10.
